# EUROPEAN PATENT APPLICATION

(11) **EP 4 608 003 A1**
(43) Date of publication of application: **27.08.2025**
(21) Application number: 22964799.5
(22) Date of filing: 10.11.2022
(51) Int. Cl.: H04W 28/08

(54) **COMMUNICATION METHOD, AND DEVICES**

(71) Applicant: GUANGDONG OPPO MOBILE TELECOMMUNICATIONS CORP., LTD., Dongguan, Guangdong 523860 (CN)
(72) Inventor: YANG, Haorui, Dongguan, Guangdong 523860 (CN); XU, Yang, Dongguan, Guangdong 523860 (CN)
(74) Representative: Mewburn Ellis LLP
(86) International application number: PCT/CN2022/131153
(87) International publication number: WO 2024/098329

(57) **Abstract**

The present disclosure relates to a communication method, a device, a computer-readable storage medium, a computer program product, and a computer program. The method includes: receiving, by a terminal device, a trigger signal; and reporting, by the terminal device, data at a first time point, the first time point being related to a waiting duration.

## Description

### TECHNICAL FIELD

The present disclosure relates to the field of communications, and in particular, to a communication method, a device, a computer-readable storage medium, a computer program product, and a computer program.

### BACKGROUND

In related technologies, mobile communication networks support zero-power consumption terminals to access the network. For example, zero-power consumption terminals may directly access base stations to report data. However, there may be a large number of zero-power consumption terminals that need to report data within the coverage area of the base station. Therefore, how to ensure that the network may receive data normally becomes a problem that needs to be solved.

### SUMMARY

Embodiments of the present disclosure provide a communication method, a device, a computer-readable storage medium, a computer program product, and a computer program.

The embodiments of the present disclosure provide a communication method, including:
receiving, by a terminal device, a trigger signal; and
reporting, by the terminal device, data at a first time point, the first time point being related to a waiting duration.

The embodiments of the present disclosure provide a communication method, including:
transmitting, by a core network device, a first request to an access network device, the first request being used to indicate the access network device to transmit a trigger signal; and
receiving, by the core network device, data reported by a terminal device, a receiving time point of the data being related to a waiting duration.

The embodiments of the present disclosure provide a communication method, including:
transmitting, by an access network device, a trigger signal; and
receiving, by the access network device, data reported by a terminal device; and transmitting, by the access network device, the data to a core network device; a transmitting time point of the data being related to a waiting duration.

Embodiments of the present disclosure provide a terminal device, including:
a first communication unit, configured to receive a trigger signal and report data; and
a first processing unit, configured to control the first communication unit to report the data at a first time point, the first time point being related to a waiting duration.

The embodiments of the present disclosure provide a core network device, including:
a second communication unit, configured to: transmit a first request to an access network device, the first request being used to indicate the access network device to transmit a trigger signal; and receive data reported by a terminal device, a receiving time point of the data being related to a waiting duration.

The embodiments of the present disclosure provide an access network device, including:
a third communication unit, configured to: transmit a trigger signal; receive data reported by a terminal device; and transmit the data to a core network device; a transmitting time point of the data being related to a waiting duration.

The embodiments of the present disclosure provide a terminal device, including: a transceiver, a processor, and a memory. The memory is configured to store a computer program, and the processor is configured to call the computer program stored in the memory and run the computer program to enable the terminal device to perform the above method.

The embodiments of the present disclosure provide an access network device, including: a transceiver, a processor, and a memory. The memory is configured to store a computer program, and the processor is configured to call the computer program stored in the memory and run the computer program to enable the access network device to perform the above method.

The embodiments of the present disclosure provide a core network device, including: a transceiver, a processor, and a memory. The memory is configured to store a computer program, and the processor is configured to call the computer program stored in the memory and run the computer program to enable the core network device to perform the above method.

The embodiments of the present disclosure provide a chip to perform the above method.

Specifically, the chip includes: a processor configured to call a computer program from a memory and run the computer program to enable a device equipped with the chip to perform the above method.

The embodiments of the present disclosure provide a computer-readable storage medium for storing a computer program, the computer program, when executed by a device, causes the device to perform the above method.

The embodiments of the present disclosure provide a computer program product, including computer program instructions that cause a computer to perform the above method.

The embodiments of the present disclosure provide a computer program, the computer program, when executed on a computer, causes a computer to perform the above method.

By adopting the above solutions, after receiving the trigger signal, the terminal device will report data only in response to that the first time point arrives. In this way, the terminal device does not report data immediately after receiving the trigger signal, and the terminal device may determine the waiting duration by itself. Therefore, the time point when the data reported by the terminal device is received on the network side may also be different, thereby avoiding problems of the network congestion or paralysis caused by receiving a large amount of data from terminals on the network side at the same time, and ensuring that the data reported by the terminal device may be normally received on the network side.

### BRIEF DESCRIPTION OF THE DRAWINGS

FIG. 1 is a schematic diagram of an application scenario according to the embodiments of the present disclosure.
FIG. 2 is a schematic diagram of a 5G network system architecture according to the embodiments of the present disclosure.
FIG. 3 is a schematic diagram of a zero-power consumption system architecture.
FIG. 4 is a schematic flowchart of a communication method according to an embodiment of the present disclosure.
FIG. 5 is a schematic flowchart of a communication method according to another embodiment of the present disclosure.
FIG. 6 is a schematic flowchart of a communication method according to yet another embodiment of the present disclosure.
FIG. 7 is a schematic flowchart of a communication method according to the embodiments of the present disclosure.
FIG. 8 is another schematic flowchart of a communication method according to the embodiments of the present disclosure.
FIG. 9 is a schematic block diagram of a terminal device according to an embodiment of the present disclosure.
FIG. 10 is a schematic block diagram of a terminal device according to another embodiment of the present disclosure.
FIG. 11 is a schematic block diagram of a core network device according to an embodiment of the present disclosure.
FIG. 12 is a schematic block diagram of a core network device according to another embodiment of the present disclosure.
FIG. 13 is a schematic block diagram of a core network device according to an embodiment of the present disclosure.
FIG. 14 is a schematic block diagram of a core network device according to another embodiment of the present disclosure.
FIG. 15 is a schematic block diagram of a communication device according to the embodiments of the present disclosure.
FIG. 16 is a schematic block diagram of a chip according to the embodiments of the present disclosure.
FIG. 17 is a schematic block diagram of a communication system according to the embodiments of the present disclosure.

### DETAILED DESCRIPTION

Technical solutions in embodiments of the present disclosure will be described below in conjunction with drawings of the embodiments of the present disclosure.

The technical solutions of the embodiments of the present disclosure may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (NTN) system, a universal mobile telecommunication system (UMTS), a wireless local area network (WLAN), a wireless fidelity (WiFi), or a 5th-generation (5G) communication system.

Generally speaking, traditional communication systems support a limited number of connections and are easy to implement. However, with the development of the communication technology, mobile communication system will support not only the traditional communication, but also, for example, device to device (D2D) communication, machine to machine (M2M) communication, machine type communication (MTC), vehicle to vehicle (V2V) communication, or vehicle to everything (V2X) communication. The embodiments of the present disclosure may also be applied to these communication systems.

In a possible implementation, the communication system in the embodiments of the present disclosure may be applied to a carrier aggregation (CA) scenario, a dual connectivity (DC) scenario, or a standalone (SA) network deployment scenario.

In a possible implementation, the communication system in the embodiments of the present disclosure may be applied to an unlicensed spectrum, and the unlicensed spectrum may also be considered as a shared spectrum. Alternatively, the communication system in the embodiments of the present disclosure may be applied to a licensed spectrum, and the licensed spectrum may also be considered as an unshared spectrum.

The embodiments of the present disclosure are described in conjunction with a network device and a terminal device. The terminal device may also be referred to as a user equipment (UE), an access terminal, a user unit, a user station, a mobile station, a mobile radio station, a remote station, a remote terminal, a mobile device, a user terminal, a terminal, a wireless communication device, a user agent or a user apparatus, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, or a terminal device in next-generation communication system such as NR network or future evolution of a public land mobile network (PLMN) network.

In the embodiments of the present disclosure, the terminal device may be deployed on land including indoor or outdoor, handheld, wearable or vehicle-mounted device, or deployed on water (e.g., a ship), or deployed in the air (e.g., an airplane, a balloon, and a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical system, a wireless terminal device in smart grid, a wireless terminal device in transportation safety, a wireless terminal device in smart city, a wireless terminal device in smart home, or the like.

By way of example but not limitation, in the embodiments of the present disclosure, the terminal device may also be a wearable device. The wearable device, also referred to as a wearable smart device, is a generic term for devices that are wearable and developed by applying wearable technologies to intelligently design daily wears, such as glasses, gloves, watches, clothing, and shoes. The wearable device is a portable device that can be worn directly on the body, or integrated into a user's clothing or accessories. The wearable device not only is a hardware device, but also achieves powerful functions through software support, data interaction and cloud interaction. In a broad sense, wearable smart devices include a fully-featured and large-sized device that may achieve all or partial functions without relying on a smartphone, e.g., a smart watch or smart glasses, and a device that only focuses on a certain type of application function and needs to be used in conjunction with other devices such as a smartphone, e.g., various types of smart bracelets and smart jewelry for monitoring physical signs.

In the embodiments of the present disclosure, the network device may be a device used for communicating with a mobile device. The network device may be an access point (AP) in WLAN, a base transceiver station (BTS) in GSM or CDMA, a NodeB (NB) in WCDMA, an evolutional Node B (eNB or eNodeB) in LTE, a relay station or an access point, a vehicle-mounted device, a wearable device, a network device (gNB) in NR network, a network device in future evolution of PLMN or a network device in NTN, or the like.

By way of example but not limitation, in the embodiments of the present disclosure, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, and other positions.

In the embodiments of the present disclosure, the network device may provide services for a cell, and the terminal device communicates with the network device through transmission resources (e.g., frequency domain resources, or frequency spectrum resources) used by the cell. The cell may be a cell corresponding to the network device (e.g., the base station). The cell may belong to a macro base station or a base station corresponding to a small cell. The small cell here may include a metro cell, a micro cell, a pico cell, a femto cell, etc. These small cells have characteristics of small coverage and low transmit power, and are applicable for providing high-speed data transmission services.

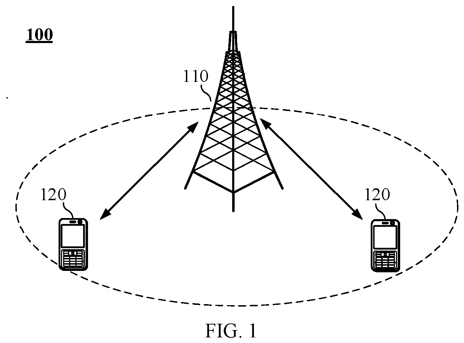

FIG. 1 exemplarily shows a communication system 100. The communication system includes one network device 110 and two terminal devices 120. In a possible implementation, the communication system 100 may include multiple network devices 110, and there may be another number of terminal devices 120 within a coverage range of each network device 110, which is not limited in the embodiments of the present disclosure.

In a possible implementation, the communication system 100 may further include other network entities such as a mobility management entity (MME) and an access and mobility management function (AMF), which is not limited in the embodiments of the present disclosure.

Here, network devices may include an access network device and a core network device. That is, the wireless communication system further includes multiple core networks for communicating with the access network devices. The access network device may be an evolutional node B (eNB or e-NodeB), a macro base station, a micro base station (also called a "small base station"), a pico base station, an access point (AP), or a transmission point (TP) in a long-term evolution (LTE) system, a next-generation (mobile communication system) (next radio, NR) or an authorized auxiliary access long-term evolution (LAA-LTE) system, or a new-generation Node B (gNodeB).

It will be understood that, in the embodiments of the present disclosure, a device with a communication function in the network/system may be referred to as a communication device. Considering the communication system shown in FIG. 1 as an example, communication devices may include the network device and the terminal device with the communication function, and the network device and the terminal device may be specific devices in the embodiments of the present disclosure, which will not be described in detail here. The communication devices may further include other devices in the communication system, such as a network controller, a mobility management entity, and other network entities, which are not limited in the embodiments of the present disclosure.

To facilitate understanding of the embodiments of the present disclosure, the basic processes and basic concepts involved in the embodiments of the present disclosure will be briefly described below. It should be understood that the basic processes and basic concepts introduced below do not limit the embodiments of the present disclosure.

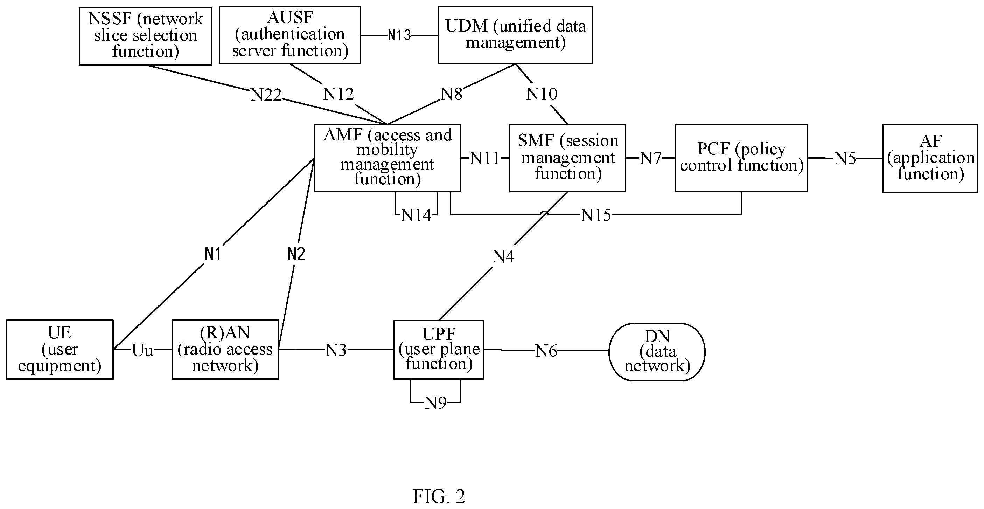

The 5G network system architecture is shown in FIG. 2, and the 5G network system architecture includes: NSSF (network slice selection function) mainly used for the management of network slice related information, such as selecting network slices for terminal devices; AUSF (authentication server function) used to complete the identity authentication function of user access; UDM (unified data management) used to manage and store subscription data and authentication data; AMF (access and mobility management function) used to complete mobility management, security anchor point and security context management, etc., in addition to mobility management for UE, AMF being also responsible for forwarding session management related messages between UE and SMF; SMF (session management function) used to complete session management, IP address allocation and management for UE, etc.; PCF (policy control function) responsible for formulating policies related to mobility management for UE, session management, billing, etc.; AF (application function) used for external application servers; UPF (user plane function) used for external application servers; Function) is used for complex user-plane handling, such as forwarding traffic between radio access network and Internet, reporting traffic usage, and implementing QoS (quality of service) policies; and DN (data network) referring to the 5GC external data network (e.g., Internet).

In addition, data is transmitted between nodes of 5GC (5G core network), between user equipment (UE) and the nodes of 5GC, between UE and radio access network (RAN), and between RAN and the nodes of 5GC via corresponding interfaces. For example, as shown in FIG. 2, in the 5GC, data is transmitted between AMF and NSSF via an interface N22; data is transmitted between AMF and SMF via an interface N11; data is transmitted between AMF and AUSF via an interface N12; data is transmitted between AMF and UDM via an interface N8; data is transmitted between SMF and UPF via an interface N4; data is transmitted between UPF and external data network via an interface N6, and transmitted between UPF and AN via an interface N3; the UE establishes an access layer connection with AN via an interface Uu for access layer message interaction and wireless data transmission; the UE establishes a non-access stratum (NAS) connection with AMF via an interface N1 for NAS message interaction; data is transmitted between RAN and AMF via an interface N2; and data is transmitted between RAN and UPF via an interface N3. It should be understood that the above only describes the interfaces between some nodes, and other interfaces between other 5GC nodes in FIG. 2 are not described in detail one by one.

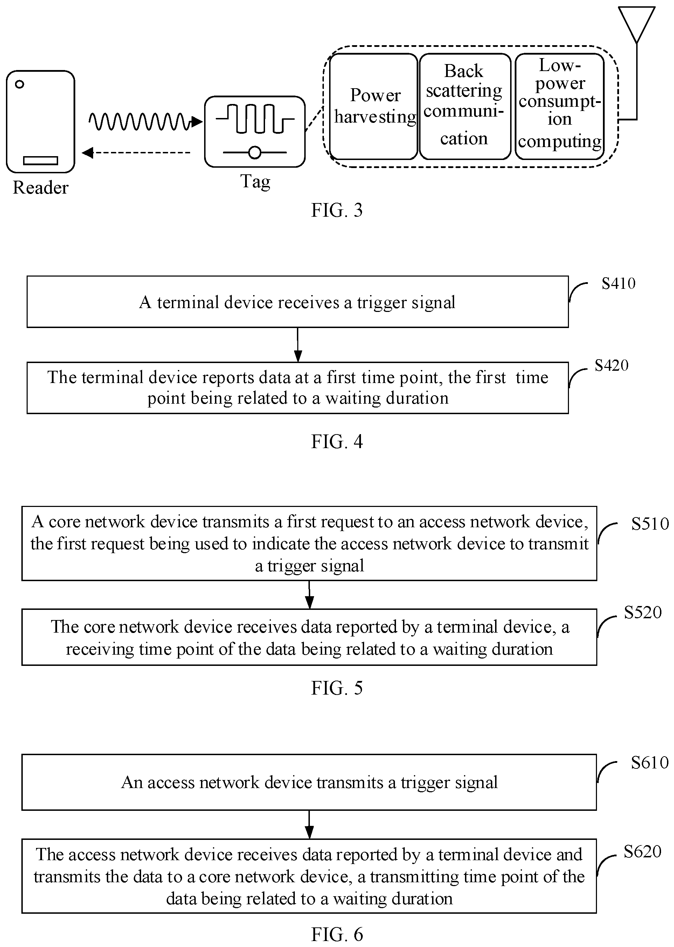

Zero-power consumption communication network is a wireless communication technology suitable for short distance and low rate. Zero-power consumption devices mainly combine radio frequency power harvesting technology, back scattering technology, and low-power consumption computing technology to achieve the advantage of device nodes carrying no power supply. The basic architecture of the zero-power consumption system is shown in FIG. 3, and the basic architecture of the zero-power system includes a reader and tag. The tag may have functions such as power harvesting, back scattering communication, and low-power consumption computing. Among them, power harvesting may also be called radio frequency power harvesting, core of which is to convert radio frequency energy into direct current. The energy may be stored in batteries or capacitors, or may be directly used to drive logic circuits, digital chips or sensor devices after collection, so as to complete the modulation and transmission of back scattering signals, the collection and processing of sensor information and other functions and applications. Tag is a type of zero-power consumption terminal. It should be understood that in actual scenarios, a zero-power consumption terminal may be a tag or a common device, which is not limited here.

With the development of 5G systems, the 3GPP standard requires 5G systems to support the zero-power consumption terminal access to the network. The scenarios that the zero-power consumption terminal accesses networks are mainly targeted at the following characteristics: extreme environments that are not suitable for ordinary terminals to operate, using terminals with very low power consumption and cost, and battery-free terminals. Zero-power consumption communication systems may be used in scenarios such as wireless industrial sensing networks, smart agriculture, smart warehousing and logistics, and smart homes. The zero-power consumption terminal may be connected to the base station directly or may be connected to the base station through a relay device, the former of which is called direct mode, and the latter of which is called indirect mode.

Based on power sources and usage manners of zero-power consumption terminals, the zero-power consumption terminals may be divided into the following types.
1) Passive zero-power consumption terminal. The passive zero-power consumption terminal does not require the built-in battery. In a case where the zero-power consumption terminal approaches a network device (e.g., a reader/writer in a RFID (radio frequency identification) system), the zero-power consumption terminal is located within near-field formed by radiation of an antenna of the network device. Therefore, the antenna of the passive zero-power consumption terminal generates an induced current through electromagnetic induction, and the induced current drives a low-power chip circuit of the zero-power consumption terminal. Thus, demodulation of a forward link signal, modulation of a reverse link signal and other operations are realized. For the back scattering link, the passive zero-power consumption terminal transmits signals in a back scattering manner.
   It may be seen that the passive zero-power consumption terminal does not require a built-in battery to drive both the forward link and the reverse link, and is a zero-power consumption terminal in a real sense. Since the passive zero-power consumption terminal does not require the battery, the radio frequency circuit and baseband circuit are simple, in which devices, for example, low-noise amplifiers (LNA), power amplifiers (PA), crystal oscillators, analog-to-digital converters (ADC) are not required. Therefore, the passive zero-power consumption terminal has many advantages such as small size, light weight, low price, and long service life. The characteristics of the passive zero-power consumption terminal may also include: no battery; obtaining power from the surrounding environment (e.g., radio waves, solar energy, wind energy, mechanical kinetic energy); no USIM (universal subscriber identity module). It may also store a certain amount of power through the surrounding environment, but the power is less, so the supported functional logic is much less than that of ordinary mobile phone terminals.
2) Semi-passive zero-power consumption terminal. The semi-passive zero-power consumption terminal itself does not have a conventional battery, but may use a radio frequency power harvesting module to harvest radio wave power and store the harvested power in a power storage unit (e.g., a capacitor). After obtaining power, the power storage unit may drive a low-power consumption chip circuit of the semi-passive zero-power consumption terminal, so that demodulation of the forward link signal, modulation of the reverse link signal and other operations are realized. For the back scattering link, the semi-passive zero-power consumption terminal transmits signals in the back scattering manner.
   It may be seen that the semi-passive zero-power consumption terminal does not require a built-in battery to drive both the forward link and the reverse link. Although the power stored in the capacitor is used in operation, the power comes from the radio power harvested by the power harvesting module. Therefore, it is also a zero-power consumption terminal in a real sense. The semi-passive zero-power consumption terminal inherits many advantages of the passive zero-power consumption terminal, so it has many advantages such as small size, light weight, low price and long service life.
3) Active zero-power consumption terminal. The zero-power consumption terminal used in some scenarios may also be an active zero-power consumption terminal, and such a terminal may have a built-in battery. The battery is used to drive a low-power consumption chip circuit of the active zero-power consumption terminal, so as to realize demodulation of the forward link signal, modulation of the reverse link signal and other operations. However, for the back scattering link, the active zero-power consumption terminal transmits signals in the back scattering manner. Therefore, the zero-power consumption of this type of terminal is mainly reflected in the fact that signal transmission of the reverse link does not require the terminal's own power, but uses the back scattering manner. Active zero-power consumption terminal with built-in battery to power the RFID chip to increase the reading and writing distance of the tag and improve the reliability of communication. Therefore, it may be applied in some scenarios with relatively high requirements on communication distance, reading latency, etc.

Based on the above description, it may be seen that zero-power consumption terminals have the characteristics of small size, large number and low complexity. For direct mode, in a case where the base station transmits a trigger signal, if there are a large number of zero-power consumption terminals under the base station that need to respond, the network may receive a large amount of reply signaling or data at the same time, which may cause network congestion or paralysis. Therefore, how to ensure that the network may receive data normally becomes a problem that needs to be solved.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

It should be understood that "indication" mentioned in the embodiments of the present disclosure may mean a direct indication, or an indirect indication, or may represent an association. For example, A indicates B, which may mean that A directly indicates B (for example, B may be obtained by A) or may mean that A indirectly indicates B (for example, A indicates C, and B may be obtained by C), or may mean that there is an association between A and B.

In the description of the embodiments of the present disclosure, the term "corresponding" may mean that there is a direct correspondence or indirect correspondence between two, or there is an association between the two, or may mean a relationship of indicating and being indicated or a relationship of configuring and being configured, etc.

To facilitate understanding of the technical solutions of the embodiments of the present disclosure, the related technologies of the embodiments of the present disclosure are described below. The following related technologies, as optional solutions, may be arbitrarily combined with the technical solutions of the embodiments of the present disclosure, and those combined solutions all fall within the protection scope of the embodiments of the present disclosure.

FIG. 4 is a schematic flowchart of a communication method according to an embodiment of the present disclosure. The method includes at least a part of the following contents.

In S410, a terminal device receives a trigger signal.

In S420, the terminal device reports data at a first time point, the first time point being related to a waiting duration.

FIG. 5 is a schematic flowchart of a communication method according to another embodiment of the present disclosure. The method includes at least part of the following contents.

In S510, a core network device transmits a first request to an access network device, the first request being used to indicate the access network device to transmit a trigger signal.

In S520, the core network device receives data reported by a terminal device, a receiving time point of the data being related to a waiting duration.

FIG. 6 is a schematic flowchart of a communication method according to still another embodiment of the present disclosure. The method includes at least part of the following contents.

In S610, an access network device transmits a trigger signal.

In S620, the access network device receives data reported by a terminal device and transmits the data to a core network device, a transmitting time point of the data being related to a waiting duration.

Here, the access network device may be any one of a base station, gNB, eNB, etc. The core network device may be a device in 5GC. The core network device may be one of: an AMF, an UPF, and an SMF. In a preferred example, the aforementioned core network device is an AMF.

The aforementioned terminal device may be an Internet of Things (IoT) terminal device, or an Ambient power enabled Internet of Things (AIoT) terminal device. In some possible examples, the terminal device may be a zero-power consumption terminal, for example, a zero-power consumption IoT terminal or a zero-power consumption AIoT terminal. For another example, the zero-power IoT terminal may be a semi-passive zero-power IoT terminal or an active zero-power IoT terminal, or the zero-power AIoT terminal may be an active zero-power AIoT terminal or a semi-passive AIoT terminal. In some other possible examples, the terminal device may be a terminal device with IoT or AIoT capabilities.

It should be understood that relevant descriptions of the aforementioned access network device, core network device and terminal device are applicable to the communication method provided by any one of the embodiments provided in FIGS. 4 to 6.

In some possible implementations, in a case where there is a need to collect data on the network side, a first request is transmitted by a device on the core network side to an access network device, so that the access network device transmits a trigger signal to the terminal device. In this case, the first request carries first configuration information, and the trigger signal carries the first configuration information. The details are as follows.

A core network device transmitting a first request to an access network device includes: in response to that the core network device receives a second request, the core network device transmitting the first request to the access network device; where the second request is used to indicate the core network device to transmit the first request.

The access network transmitting a trigger signal includes: in response to that the access network device receives a first request transmitted by the core network device, the access network device transmitting the trigger signal to the terminal device.

Correspondingly, the terminal device receiving the trigger signal includes: the terminal device receiving the trigger signal transmitted by the access network device. Specifically, the terminal device receiving the trigger signal means that an access stratum (AS) of the terminal device receives the trigger signal transmitted by the access network device.

The first request carries first configuration information, and the first configuration information is used for determining the waiting duration.

The second request indicates that a target AF needs to obtain data, or needs to collect data. Specifically, the second request indicates that the target AF needs to trigger the core network device to transmit the first request to obtain data. The second request carries the first configuration information, or the second request carries second configuration information; the second configuration information is related to the first configuration information. The second request may further carry at least one of a service identifier (ID) or a service area; moreover, the second request may further carry a target AF ID.

The target AF may be one of one or more AFs. Any one of the one or more AFs may be an external application server.

The processing of receiving the second request by the core network device may include one of: the core network device directly receiving the second request transmitted by the target application function (AF); or the core network device receiving the second request transmitted by other core network devices. Here, the other core network devices may be devices in the core network except the core network device.

Exemplarily, the aforementioned core network device is an AMF, and the aforementioned other core network devices include an SMF. The aforementioned core network device receives the second request transmitted by other core network devices, which may include: AMF receiving the second request transmitted by SMF.

In this example, the processing from the target AF to the SMF may further include: in a case where the target AF has a data collection requirement, the target AF transmitting a third request to NEF (network element function); in response to that the NEF receives the third request, the NEF transmitting a fourth request to the SMF; in response to that the SMF receives the fourth request, the SMF transmitting the second request to the AMF. Alternatively, in a case where the target AF has a data collection requirement, the target AF transmitting a fifth request to the SMF; in response to that the SMF receives the fifth request, the SMF transmitting the second request to the AMF. The fifth request may carry the first configuration information or the second configuration information; the fifth request may further carry at least one of a service ID or a service area; moreover, the fifth request may further carry a target AF ID.

The aforementioned NEF, in response to that receiving the third request, transmits the fourth request to the SMF, which may include: in response to that the NEF receives the third request and determines, based on the third request, that the target AF is allowed to perform services via 5GC, the NEF transmitting the fourth request to the SMF. The third request may carry the first configuration information or the second configuration information; the second configuration information is related to the first configuration information; the third request may further carry at least one of a service identifier, a service area, and a target AF ID. Correspondingly, the method for the NEF determining, based on the third request, that the target AF is allowed to perform service via 5GC, which may include at least one of: the NEF determining, based on the target AF ID in the third request, whether the target AF is a preset AF allowed to perform service data transmission through 5GC, if so, determining that the target AF is allowed to perform service via 5GC; the NEF determining, based on the service ID in the third request, whether the service is a preset service allowed to perform data transmission via 5GC, if so, determining that the target AF is allowed to perform service via 5GC. The fourth request may carry the first configuration information or the second configuration information; the fourth request may further carry at least one of a service ID or a service area; moreover, the fourth request may further carry the target AF ID.

Further, the NEF transmitting the fourth request to the SMF may include: the NEF selecting an SMF from multiple candidate SMFs according to the service identifier and/or service area in the third request, and transmitting the fourth request to the selected SMF.

In response to that the aforementioned SMF receives the fourth request, the processing of the SMF transmitting the second request to the AMF may include: the SMF determining the AMF from the multiple candidate AMFs according to a first correspondence and at least one of the service ID and service area in the fourth request, and transmitting the second request to the AMF. The first correspondence may refer to the candidate service identifier and/or candidate service area corresponding to each candidate AMF of the multiple candidate AMFs.

In the aforementioned exemplary description, although some contents included in the third request, the fourth request, the fifth request and the second request are the same, the third request, the fourth request, the fifth request and the second request are respectively carried by different signaling between different device interfaces.

It should be understood that the above descriptions of several examples of the AMF receiving the second request in a case where the core network device is AMF do not exhaustively enumerate the processing of the core network device receiving the second request.

The aforementioned embodiments have described that the second request may carry a service identifier and/or a service area. In this implementation, the aforementioned second request may further carry the first configuration information, or may further carry the second configuration information.

Optionally, the second request carries the first configuration information; accordingly, the core network device transmitting the first request to the access network device means that the core network device may directly transmit the first configuration information carried in the first request to the access network device. In this case, the second configuration information may include a first response duration. The first configuration information may also include a first response duration. Furthermore, the second configuration information may further include first indication information; correspondingly, the first configuration information may further include the first indication information, and the first indication information is used for indicating generation of a random number based on the first response duration. A function used to generate the random number may be a normal function or a uniform distribution function.

Optionally, the second request carries the second configuration information; accordingly, the core network device transmitting the first request to the access network device includes: the core network device obtaining the first configuration information based on the second configuration information in the second request, and transmitting the first configuration information carried in the first request to the access network device.

In this case, the second configuration information may include a second response duration. The first configuration information may include a first response duration, and the first response duration may be obtained based on the second response duration.

The aforementioned second response duration may also be referred to as a second response time range. The second response duration may be measured in milliseconds. Of course, other units may also be used, which are not exhaustively enumerated here. The aforementioned first response duration may also be referred to as a first response duration range. The first response duration may be measured in milliseconds. Of course, other units may also be used, which are not exhaustive enumerated here.

For example, the first response duration may be one of: being equal to the second response duration; subtracting a first specified duration from the second response duration; adding a second specified duration to the second response duration; or a second random number not greater than the second response duration. That is, the way in which the core network device obtains the first configuration information based on the second configuration information in the second request may be one of: the core network device using the second response duration of the second configuration information in the second request as the first response duration, and generating the first configuration information based on the first response duration; the core network device obtaining the first response duration by subtracting a first specified duration from the second response duration of the second configuration information in the second request, and generating the first configuration information based on the first response duration; the core network device obtaining the first response duration by adding a second specified duration to the second response duration of the second configuration information in the second request, and generating the first configuration information based on the first response duration; the core network device obtaining a second random number not greater than the second response duration based on the second response duration of the second configuration information in the second request, using the second random number as the first response duration, and generating the first configuration information based on the first response duration.

The first specified duration may be set according to actual conditions, for example, it may be 1 millisecond or 0.1 milliseconds, or larger or smaller, which are not exhaustively enumerated here. The second specified duration may be set according to actual conditions, for example, it may be 0.05 milliseconds or larger or smaller, which is not exhaustively enumerated here. The function that may be used to generate the aforementioned second random number may be a normal function or a uniform distribution function.

Optionally, the first request may further carry second indication information, the second indication information includes identification information corresponding to one or more devices that need to be triggered; the one or more devices that need to be triggered include the terminal device. That is, in addition to carrying the first configuration information in the first request, the core network device may further carry the second indication information for indicating one or more devices that need to be triggered by the access network device in the first request. The aforementioned one or more devices that need to be triggered may be determined by the core network device according to actual conditions. For example, if the core network device supports services of multiple AFs at the same time, in response to that the core network device receives a second request, one or more devices associated with the target AF in the service area may be determined according to the second request as the aforementioned one or more devices that need to be triggered. Among the aforementioned one or more devices that need to be triggered, any one device that needs to be triggered may be a zero-power consumption terminal, specifically an AIoT device or an IoT device.

After receiving the aforementioned first request, the access network device may transmit a trigger signal to the terminal device. The trigger signal carries the first configuration information, and the first configuration information is used to determine the waiting duration.

The trigger signal is one of a paging message or a broadcast signal.

Optionally, the trigger signal is a paging message. Specifically, the trigger signal may reuse a paging message in the related art, that is, a trigger signal for triggering the terminal device to report data is added to the paging message. If the trigger signal is a paging message, the trigger signal is a signal that may be received by the corresponding device. In a preferred example, the first request carries second indication information, and the access network device may determine the identifier of each device that needs to be triggered based on the second indication information (for example, the second indication information includes UE ID of each AIoT device that needs to be triggered); accordingly, the access network device may transmit a respective trigger signal that obtained by reusing the paging message to each device that needs to be triggered. Of course, there may be another example, in which the first request does not carry the second indication information, and the access network device may transmit respective trigger signals that obtained by reusing the paging message to all devices within its coverage area.

Optionally, the trigger signal is a broadcast signal. In this case, the broadcast signal may be a signal different from a broadcast signal specified in the relevant protocol. If the trigger signal is a broadcast signal, then the trigger signal is a signal that may be received by all devices within the coverage range of the access network device. In a preferred example, if the first request does not carry the second indication information, the access network device may broadcast the trigger signal to all devices within its coverage area. Of course, there is another possible example, in which the first request carries the second indication information, but the access network device still broadcasts the trigger signal to all devices within its coverage area; then the access network device receives the data reported by the terminal device, and determines whether the identifier of the terminal device is the same as the identifier of any one of the one or more devices that need to be triggered. If so, the data is transmitted to the core network device.

The processing in which the core network device transmits a first request, and the access network device transmits a trigger signal to the terminal device after receiving the first request is described above.

The aforementioned terminal device receives a trigger signal, and the terminal device reports data at the first time point. It may be that: the terminal device receives a trigger signal, and if the trigger signal does not carry the second indication information, the terminal device reports the data at the first time point; if the trigger signal carries the second indication information, the terminal device determines whether its own identification information is any one of the identification information corresponding to one or more devices that need to be triggered in the second indication information, and if so, the terminal device reports the data at the first time point. In addition, it may also include that: if the identification information of the terminal device itself is not any one of the identification information corresponding to the one or more devices to be triggered in the second indication information, the terminal device does not collect data or report data.

It should be pointed out that the data reported by the terminal device is data collected by the terminal device. The time when the terminal device collects the data may be before receiving the trigger signal or after receiving the trigger signal, which is not limited in the present embodiment.

The terminal device reports data at the first time point, which may be that: an NAS of the terminal device establishes a NAS connection with the core network device at the first time point, and reports data to the core network device via the NAS connection. Alternatively, the terminal device reports data at the first time point, which may be that: an AS of the terminal device reports data to the access network device at the first time point.

Correspondingly, the core network device receiving the data reported by the terminal device includes that: the core network device establishes a NAS connection with the terminal device, and receives the data reported by the terminal device via the NAS connection; or the core network device receives the data reported by the terminal device through the access network device.

The first time point is a time point obtained by adding the waiting duration to a receiving time point of the trigger signal. That is, the terminal device obtains the first time point by adding the waiting duration to the receiving time point of the trigger signal.

Whether the terminal device reports data from NAS to the core network device or from AS to the access network device may be pre-configured or determined by the terminal device itself, and the determining method is not limited. For example, a user may pre-configure the NAS of the terminal device to report data to the core network device, or pre-configure the AS of the terminal device to report data to the access network device. The method of pre-configuring the terminal device is not limited in the present embodiment, which will be described separately in the following.

In an embodiment, the terminal device reporting data at a first time point includes: the NAS of the terminal device establishing a NAS connection with the core network device at the first time point, and reporting the data to the core network device via the NAS connection. Correspondingly, the core network device receiving the data reported by the terminal device includes: the core network device establishing a NAS connection with the terminal device, and receiving the data reported by the terminal device via the NAS connection.

The establishing of the NAS connection with the core network device and the establishing of the NAS connection between the core network device and the terminal device may be that the terminal device and the core network device establish a NAS connection by performing a service request process between the terminal device and the core network device. The specific processing of performing the service request process between the terminal device and the core network device is not limited in the present embodiment.

Further, if the terminal device determines to report the data to the core network device via the NAS, then after the AS of the terminal device receives the trigger signal transmitted by the access network device, it may further include: the AS of the terminal device transmitting the first configuration information to a non-access stratum (NAS) of the terminal device, and determining the waiting duration based on the first configuration information. Further, the NAS of the terminal device obtains the first time point by adding the waiting duration to the receiving time point of the trigger signal.

In a possible example, the first configuration information may include a first response duration. Correspondingly, the waiting duration may be equal to the first response duration.

The NAS of the terminal device determines the waiting duration based on the first configuration information, which specifically includes: the NAS of the terminal device obtaining the first response duration from the first configuration information, and directly using the first response duration as the waiting duration.

In a possible example, the first configuration information may include a first response duration. Correspondingly, the waiting duration is a first random number determined based on the first response duration, the first random number being less than or equal to the first response duration.

The NAS of the terminal device determines the waiting duration based on the first configuration information, which specifically includes: the NAS of the terminal device obtaining the first response duration from the first configuration information, determining a first random number that is not greater than the first response duration based on the first response duration, and using the first random number as the waiting duration. In this example, the terminal device may pre-set a default first policy, and the default first policy may indicate that the terminal device needs to determine a first random number according to a first response duration, and use the first random number as the waiting duration. The function used to generate the first random number may be a normal function or a uniform distribution function.

In a possible example, the first configuration information includes a first response duration, and the first configuration information further includes first indication information, the first indication information being used for indicating generation of a random number based on the first response duration. The waiting duration is the first random number determined based on the first response duration, and the first random number is less than or equal to the first response duration.

The NAS of the terminal device determines the waiting duration based on the first configuration information, which specifically includes: in response to that the NAS of the terminal device obtains the first response duration and the first indication information from the first configuration information, generating a first random number that is not greater than the first response duration, and using the first random number as the waiting duration.

On the core network device side in the embodiment, a receiving time point of the data is at or after a time point obtained by adding the waiting duration to a transmitting time point of the first request. Since the terminal device reports data directly to the core network device, and the terminal device reports the data at the first time point obtained by adding a waiting duration to the receiving time point of the trigger signal, a duration between the time point when the core network device transmits the first request and the time point when the data is received must be not less than the aforementioned waiting duration. Specifically, the receiving time point of the data may be equal to a time point obtained by adding the waiting duration to the transmitting time point of the first request; alternatively, due to the delay caused by the transmission or the delay caused by other network requests, the receiving time point of the data may be later than the time point obtained by adding the waiting duration to the transmitting time point of the first request. Regardless of the above situations, the time point when the data reported by the terminal device is received on the core network device side is no earlier than the time point obtained by adding the waiting duration to the transmitting time point of the first request.

In the present embodiment, the core network device may also determine the waiting duration, and the processing may include: determining the waiting duration based on the first configuration information. It should be understood that the processing of determining the waiting duration by the core network device is the same as the processing of determining the waiting duration by the NAS or AS of the terminal device based on the first configuration information. For example, if the terminal device adopts the default first policy, the core network device may also adopt the same default first policy accordingly, which will not be repeated here.

In an embodiment, the terminal device reporting data at a first time point includes: the AS of the terminal device reporting the data to an access network device at the first time point.

Correspondingly, the processing of the access network device may include: the access network device receiving data reported by the terminal device, and transmitting the data to the core network device.

The processing of the core network device includes: the core network device receiving the data reported by the terminal device. Specifically, the core network device receiving the data reported by the terminal device includes: the core network device receiving the data reported by the terminal device through the access network device.

After the AS of the terminal device receives the trigger signal, the method may further include: the AS of the terminal device determining the waiting duration based on the first configuration information. That is, in this manner, the AS of the terminal device does not need to transmit the first configuration information to the NAS, and the AS of the terminal device may directly determine the waiting duration based on the first configuration information. Furthermore, the AS of the terminal device obtains the first time point by adding the waiting duration to the receiving time point of the trigger signal.

In a possible example, the first configuration information may include a first response duration. Correspondingly, the waiting duration may be equal to the first response duration.

The AS of the terminal device determining the waiting duration based on the first configuration information, specifically includes: the AS of the terminal device obtaining a first response duration from the first configuration information, and directly using the first response duration as the waiting duration.

In a possible example, the first configuration information may include the first response duration. Correspondingly, the waiting duration is a first random number determined based on the first response duration, the first random number is less than or equal to the first response duration.

The AS of the terminal device determining the waiting duration based on the first configuration information, specifically includes: the AS of the terminal device obtaining the first response duration from the first configuration information, determining a first random number that is not greater than the first response duration based on the first response duration, and using the first random number as the waiting duration. In this example, the terminal device may pre-set a default first policy, and the default first policy may indicate that the terminal device needs to determine a first random number according to a first response duration, and use the first random number as the waiting duration.

In a possible example, the first configuration information includes a first response duration, and the first configuration information further includes first indication information, the first indication information being used for indicating generation of a random number based on the first response duration. The waiting duration is a first random number determined based on the first response duration, and the first random number is less than or equal to the first response duration.

The AS of the terminal device determining the waiting duration based on the first configuration information, specifically includes: in response to that the AS of the terminal device obtains the first response duration and the first indication information from the first configuration information, generating a first random number that is not greater than the first response duration, and using the first random number as the waiting duration.

The difference from the above-mentioned embodiment is that the AS of the terminal device reports data to the access network device at the first time point. Correspondingly, the access network device receives the data reported by the terminal device and transmits the data to the core network device, which specifically means that, in response to that the access network device receives the data reported by the terminal device, directly transmits the data to the core network device. That is, as long as the access network device receives data reported by the terminal device, the access network device transmits the data to the core network device.

In the present embodiment, in a processing of the access network device transmitting the data to the core network device, the transmitting time point of the data may be at or after a time point obtained by adding the waiting duration to the transmitting time point of the trigger signal. Since the terminal device reports the data at the first time point obtained by adding the waiting duration to the receiving time point of the trigger signal, the duration between the time point when the access network device transmits the trigger signal and the time point when the data is transmitted must be no less than the waiting duration. Specifically, the transmitting time point of the data may be equal to a time point obtained by adding the waiting duration to the transmitting time point of the trigger signal, or the transmitting time point of the data may be later than the time point obtained by adding the waiting duration to the transmitting time point of the trigger signal. Regardless of the above situations, the time point when the access network device transmits the data to the core network device is no earlier than the time point obtained by adding the waiting duration to the transmitting time point of the trigger signal.

The core network device receives the data reported by the terminal device through the access network device. Similarly, on the core network device side, the receiving time point of the data is at or after the time point obtained by adding the waiting duration to the transmitting time point of the first request. This is, since the terminal device reports the data at the first time point obtained by adding the waiting duration to the receiving time point of the trigger signal, the time point when the access network device transmits data to the core network device is also at or after the time point obtained by adding the waiting duration to the transmitting time point of the trigger signal. Accordingly, the duration between the transmitting time point of the first request transmitted by the core network device and the receiving time point of the data must be no less than the aforementioned waiting duration. Specifically, the receiving time point of the data may be equal to the time point obtained by adding the waiting duration to the transmitting time point of the first request; alternatively, due to the delay caused by the transmission or the delay caused by other network requests, the receiving time point of the data may be later than the time point obtained by adding the waiting duration to the transmitting time point of the first request. Regardless of the above situations, the time point when the data is received on core network device side is no earlier than the time point obtained by adding the waiting duration to the transmitting time point of the first request.

In the present embodiment, the processing of the access network device may further include: determining the waiting duration based on the first configuration information. Similarly, the processing of the core network device may also include: determining the waiting duration based on the first configuration information. The processing of determining the waiting duration by the access network device and the processing of determining the waiting duration by the core network device should be the same as the processing of determining the waiting duration by the terminal device. For example, if the terminal device adopts the default first strategy, the core network device and access network device may also adopt the same default first strategy accordingly, which will not be repeated here.

In another embodiment, the access network device may not transmit the first configuration information to the terminal device. That is, the aforementioned trigger signal may not carry the first configuration information, that is, the trigger signal is only used to trigger the terminal device to report data.

In the present embodiment, the core network device will still receive the second request transmitted by the target AF, and transmit the first request to the access network device. The relevant descriptions of the second request and the first request are the same as those in the aforementioned embodiment, which will not be repeated here.

However, in the present embodiment, the access network device does not transmit the first configuration information to the terminal device. The processing of the access network device may include: the access network device transmitting a trigger signal to the terminal device. Correspondingly, the processing of the terminal device may include: receiving, by the AS of the terminal device, a trigger signal transmitted by the access network device; and reporting, by the AS of the terminal device, data to the access network device. Here, before the AS of the terminal device reports data to the access network device, the terminal device also collects data, and the specific processing of the collected data will not be repeated here.

The method further includes: determining, by the access network device, the waiting duration based on the first configuration information. The processing of the access network device determining the waiting duration based on the first configuration information is the same as that in the aforementioned embodiment, which will not be repeated here.

Furthermore, the access network device receiving the data reported by the terminal device and transmitting the data to the core network device includes: the access network device receiving the data reported by the terminal device; in response to that the transmitting time point of the data arrives, the access network device transmitting the data to the core network device. It should be noted that in the present embodiment, the access network device determines the time point to transmit data to the core network device, so the transmitting time point of the data may be equal to the time point obtained by adding the waiting duration to the transmitting time point of the trigger signal.

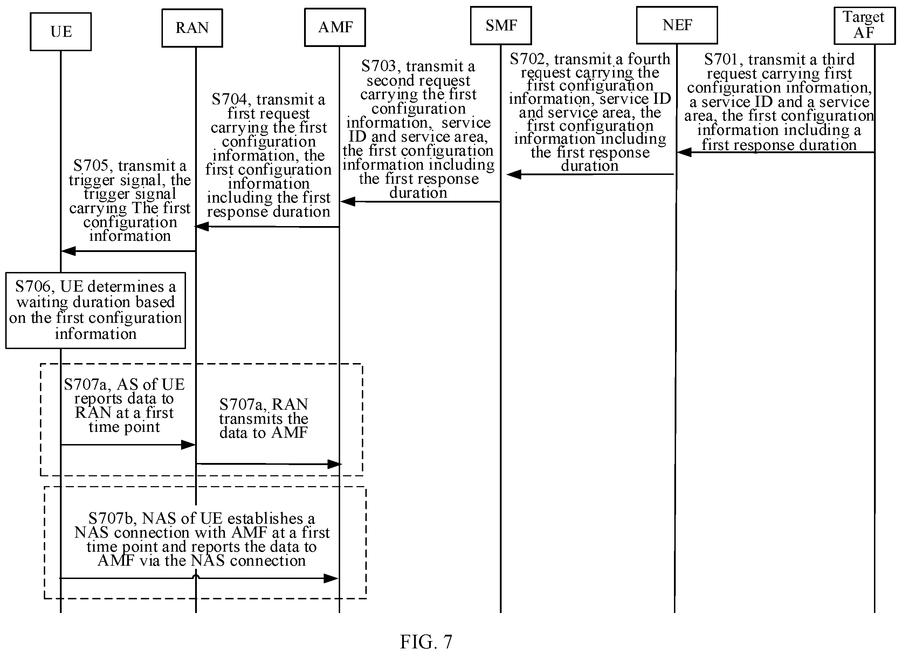

In conjunction with FIG. 7, considering examples in which the terminal device is a UE, in an example, the UE may be a zero-power consumption terminal device, such as a zero-power consumption IoT UE or a zero-power consumption AIoT UE; the access network device is a radio access network (RAN), the core network device as an AMF, and other core network devices including NEF and SMF, an exemplary description of the communication method provided by the aforementioned implementation is made, which includes the following contents.

In S701, in a case where a target AF has a data collection requirement, the target AF transmits a third request to a NEF, the third request carrying first configuration information, a service ID, and a service area, and the first configuration information including a first response duration.

It should be understood that, in another example, the third request may carry no first configuration information, but carry second configuration information, the second configuration information being related to the first configuration information and including a second response duration. This situation is not illustrated in FIG. 7 for the sake of brevity.

In addition, in addition to carrying the first response duration, the first configuration information may further carry first indication information for indicating generation of a random number. The specific description of the first configuration information is the same as that in the aforementioned embodiment, and thus will not be repeated here.

The aforementioned response duration may also be expressed as a response time range, and all possible names of the response duration are not exhaustively enumerated here.

In S702, the NEF transmits a fourth request to an SMF, the fourth request carrying the first configuration information, the service ID, and the service area, the first configuration information including the first response duration.

Specifically, it may include: in response to that the NEF determines that the target AF is allowed to perform services through the 5GC based on the third request, the NEF transmitting the fourth request to the SMF. The specific processing method is the same as that of the aforementioned embodiment. For example, in response to that the NEF determines that the target AF is a preset AF that is allowed to perform service data transmission via 5GC based on the target AF ID, and NEF determines that the service is a preset service that allows data transmission via 5GC based on the service identifier (ID), the NEF selects an SMF from multiple candidate SMFs according to the service identifier and/or service area in the third request, and transmits the fourth request to the selected SMF.

In addition, in addition to carrying the first response duration, the aforementioned first configuration information may further carry first indication information for indicating generation of a random number. The specific description of the first configuration information is the same as that in the aforementioned embodiment, and thus will not be repeated here.

In S703, the SMF transmits a second request to an AMF, the second request carrying the first configuration information, the service ID, and the service area, the first configuration information including the first response duration.

Specifically, it may include: the SMF determining the AMF from multiple candidate AMFs according to the first correspondence and the service identifier and/or service area in the second request, and transmitting the second request to the AMF. The first correspondence may refer to a candidate service identifier and/or candidate service area corresponding to each candidate AMF of multiple candidate AMFs.

In addition, in addition to carrying the first response duration, the aforementioned first configuration information may further carry first indication information for indicating generation of a random number. The specific description of the first configuration information is the same as that in the aforementioned embodiment, and thus will not be repeated here.

In S704, the AMF transmits a first request to an RAN, the first request carrying the first configuration information, the first configuration information including the first response duration.

In addition to the first configuration information, the first request may further carry second indication information, the second indication information including UE ID of one or more AIoT UEs that need to be triggered; the one or more AIoT UEs that need to be triggered may include the aforementioned UE. It should be noted that if the first request carries the second indication information, the RAN may only trigger the corresponding AIoT UE; if the first request does not carry the second indication information, the RAN triggers all AioT UEs within its coverage.

In S705, the RAN transmits a trigger signal, the trigger signal carrying the first configuration information.

In S706, the UE determines a waiting duration based on the first configuration information.

Specifically, the UE receives a trigger signal; and the UE determines the waiting duration based on the first configuration information carried in the trigger signal. The UE receiving the trigger signal means that AS of the UE receives the trigger signal transmitted by the RAN.

In a case, if the UE needs to perform a service request process subsequently, the AS of the UE transmits the first configuration information to NAS of the UE; the NAS of the UE determines the waiting duration based on the first configuration information. Further, the NAS of the UE obtains a first time point by adding the waiting duration to the receiving time point of the trigger signal.

In another case, if the UE does not need to perform the service request process subsequently, i.e., the AS of the UE directly reports data, the AS of the UE determines the waiting duration based on the first configuration information. Further, the AS of the UE obtains the first time point by adding the waiting duration to the receiving time point of the trigger signal.

Regarding whether the UE needs to perform the service request process subsequently, it may be pre-configure or pre-determined, which will not be repeated here; the purpose of performing the service request process is to enable the UE to establish a NAS connection with the AMF.

The processing of the waiting duration is the same as that in the above-mentioned embodiment, and thus will not be repeated here.

After completing the S706, the following processing of S707a may be performed, or the processing of S707b may be performed.

In S707a, an AS of the UE reports data to the RAN at a first time point, and the RAN transmits the data to the AMF.

In S707b, a NAS of the UE establishes a NAS connection with the AMF at a first time point and reports the data to the AMF via the NAS connection.

It should be understood that after the S707a is completed, or after the S707b is completed, the AMF may further transmit data to the target AF through the NEF and SMF. For the sake of brevity, this part of the process is not illustrated in FIG. 7.

It should be noted that, although not illustrated in FIG. 7 for simplicity, in another possible example, if the UE does not need to perform a service request process subsequently, the trigger signal transmitted by the RAN in the S705 may not carry the first configuration information; after receiving the trigger signal, the AS of the UE collects data, and then reports the data directly to the RAN; correspondingly, after receiving the data reported by the UE, the RAN transmits the data of the UE to the AMF in response to that the transmitting time point of data arrives. The detailed description of this case is the same as that of the aforementioned embodiment. In this example, whether the UE needs to perform a service request process subsequently may be known in advance by the RAN, for example, it may be transmitted by the UE to the RAN in advance, or it may be preset, or it may be determined by pre-negotiation between the RAN and the UE, which is not limited in the embodiment.

In combination with the above implementation, it may be seen that after receiving the trigger signal, the terminal device will report data only when the first time point arrives. In this way, the terminal device does not report data immediately after receiving the trigger signal, and the terminal device may determine the waiting duration by itself. Therefore, the time point when the data reported by the terminal device is received on the network side may also be different, thereby avoiding the problems of network congestion or paralysis caused by receiving a large amount of data from terminals at one time, and ensuring that the data reported by the terminal device may be received normally on the network side.

In some possible implementations, the terminal device pre-registers in the core network, and the first configuration information is obtained; then, in a case where there is a data collection demand on the network side, the device on the core network side triggers the access network device to transmit a trigger signal, and in this case, the trigger signal does not carry the first configuration information. The following is specifically described.

Before the terminal device receives the trigger signal, the method may further include: receiving, by the terminal device, first configuration information; the first configuration information being used for determining the waiting duration. Specifically, the terminal device receiving the first configuration information includes: the NAS of the terminal device receiving the first configuration information transmitted by the core network device.

The processing of the core network device transmitting the first configuration information may include: he core network device transmitting the first configuration information to the terminal device, the first configuration information being used for determining the waiting duration.

The first configuration information may include a first response duration. Furthermore, the first configuration information may further include first indication information, the first indication information being used for indicating generation of a random number based on the first response duration. The detailed description of the first response duration and the first indication information is the same as that in the aforementioned embodiment, and will not be repeated here.

Before the terminal device receives the first configuration information, the method may further include: the terminal device transmitting capability information, the capability information being used for indicating whether the terminal device supports an Ambient Internet of Things (IoT) capability based on energy harvesting. Correspondingly, before the core network device transmits the first configuration information to the terminal device, the method further include: the core network device receiving the capability information of the terminal device the capability information of the terminal device being used to indicate whether the terminal device supports the Ambient Internet of Things (IoT) capability based on energy harvesting.

Here, the Ambient IoT capability may also be described as a capability of data collection in the Ambient IoT, or a capability of data collection and reporting in the Ambient IoT, etc., which is not limited here.

The capability information may be transmitted to the core network device. For example, the terminal device transmitting capability information specifically refers to the terminal device transmitting capability information to the core network device; the capability information may be carried by any type of NAS message. For another example, the terminal device transmitting capability information may refer to that, the terminal device transmits the capability information to the access network device, and the access network device transmits the capability information to the core network device. The terminal device transmits the capability information, carried by air interface signaling, such as RRC (radio resource control) signaling, MAC (medium access control) CE (control element), etc., to the access network device.

In a preferred example, the first configuration information is obtained during a registration processing of the terminal device and is specifically carried by a registration acceptance message.

The terminal device transmitting the capability information includes: the NAS of the terminal device transmitting a registration request message to the core network device, the registration request message carrying the capability information. Correspondingly, the core network device receiving the capability information of the terminal device includes: the core network device receiving the registration request message transmitted by the terminal device, the registration request message carrying the capability information of the terminal device.

In this example, the registration request message may specifically include an indication of whether the terminal device supports the Ambient IoT capability; the indication may be a bit in the 5G system mobility management (5GMM) capability parameter, that is, a specified bit may be defined in the 5GMM capability parameter to indicate whether the terminal device supports the Ambient IoT capability. Furthermore, the value of this bit may be used to indicate whether the terminal device supports the Ambient IoT capability. For example, if the value of this bit is a first value, it indicates that the terminal device supports the Ambient IoT capability. If the value of this bit is a second value, it indicates that the terminal device does not support the Ambient IoT capability. The first value and the second value are different; for example, the first value may be 1 and the second value may be 0, or the first value may be 0 and the second value may be 1, which is not limited here.

In this example, after the core network device receives the capability information of the terminal device, the core network device transmits first configuration information to the terminal device. The core network device transmitting the first configuration information to the terminal device includes: in response to that the core network device determines that the terminal device supports the Ambient IoT capability based on the capability information of the terminal device, the core network device transmitting a registration acceptance message to the terminal device; the registration acceptance message carrying the first configuration information. Correspondingly, the NAS of the terminal device receiving the first configuration information transmitted by the core network device includes: in response to that the NAS of the terminal device transmits a registration request message to the access network device, NAS of the terminal device receiving the registration acceptance message transmitted by the core network device; the registration acceptance message carrying the first configuration information.

In response to that the core network device determines that the terminal device supports the Ambient IoT capability based on the capability information of the terminal device, the core network device transmitting a registration acceptance message to the terminal device includes: in response to that the core network device determines that the terminal device supports the Ambient IoT capability based on the capability information of the terminal device, the core network device determining whether to authorize the terminal device to access the network as an Ambient IoT terminal based on subscription information of the terminal device; if authorization is determined, the registration acceptance message is transmitted to the terminal device; the registration acceptance message carries the first configuration information. Here, the subscription information of the terminal device may be preset in the core network device. The method for obtaining the subscription information of the terminal device is not limited in the present embodiment.

The core network device transmitting the first configuration information to the terminal device includes: in response to that the core network device receives a registration request message transmitted by the terminal device, the core network device transmitting the registration acceptance message to the terminal device, the registration acceptance message carrying the first configuration information.

In another example, the first configuration information is carried in a NAS message after the terminal device completes registration.

The terminal device transmitting capability information includes: the NAS of the terminal device transmitting a registration request message to the core network device, the registration request message carrying the capability information. Correspondingly, the core network device receiving the capability information of the terminal device includes: the core network device receiving a registration request message transmitted by the terminal device, the registration request message carrying the capability information of the terminal device. The registration request message may specifically include an indication of whether the terminal device supports the Ambient IoT capability, the specific description of which is the same as the above example and will not be repeated here.

The difference from the previous example is that the core network device in this example performs registration processing based on only the capability information of the terminal device, which specifically includes: in response to that the core network device determines that the terminal device supports the Ambient IoT capability based on the capability information of the terminal device, the core network device determining whether to authorize the terminal device to access the network as an Ambient IoT terminal based on the subscription information of the terminal device; if authorization is determined, the registration acceptance message is transmitted to the terminal device; the registration acceptance message carrying no first configuration information.

The core network device transmitting the first configuration information to the terminal device includes: after the terminal device completes registration, the core network device transmitting a NAS message to the terminal device, the NAS message carrying the first configuration information. Correspondingly, the non-access NAS of the terminal device receiving the first configuration information transmitted by the core network device includes: after the terminal device completes registration, the NAS of the terminal device receiving a NAS message transmitted by the core network device, the NAS message carrying the first configuration information.

The NAS message may be any one of NAS messages transmitted by the core network device to the terminal device after the terminal device completes registration, which will not limited here.

Regarding the processing of the terminal device determining the waiting duration, the description is made in the following. If the terminal device determines that the service request process does not need to be performed, the processing of the terminal device may also include: the NAS of the terminal device transmitting the first configuration information to the AS of the terminal device. Furthermore, it may also include: the AS of the terminal device determining the waiting duration based on the first configuration information.

If the terminal device determines that the service request process needs to be performed, the processing of the terminal device may further include: the NAS of the terminal device determining the waiting duration based on the first configuration information.

Based on the processing of the aforementioned implementation, the terminal device may obtain the first configuration information. Regarding the processing timing for the terminal device to determine the waiting duration, the waiting duration may be determined after receiving the first configuration information, or the waiting duration may be determined, based on the first configuration information, when a trigger signal is received, both of which are within the protection scope of the present embodiment.

In the following, the processing of triggering the terminal device to report data will be explained.

The core network device transmitting a first request to an access network device includes: in response to that the core network device receives a second request, the core network device transmitting the first request to the access network device, the second request being used to indicate the core network device to transmit the first request.

The access network transmitting a trigger signal includes: in response to that the access network device receives a first request transmitted by the core network device, the access network device transmitting the trigger signal to the terminal device.

The terminal device receiving the trigger signal includes: the terminal device receiving the trigger signal transmitted by the access network device. Specifically, the terminal device receives the trigger signal, which means that the AS of the terminal device receives the trigger signal transmitted by the access network device.

The second request indicates that a target AF needs to obtain data or needs to collect data. Specifically, the second request indicates that the target AF needs to trigger the core network device to transmit the first request to obtain data. The second request may carry at least one of a service identifier (ID) or a service area; furthermore, the second request may further carry a target AF ID.

The processing of the core network device receiving the second request is the same as that in the aforementioned embodiment and will not be described repeatedly. The difference from the aforementioned embodiment is that the second request does not carry the first configuration information or the second configuration information. In addition, in the processing of the core network device receiving the second request from other core network devices, the processing between the other core network devices and the target AF is the same as that in the aforementioned embodiment. The difference is only that the third request, the fourth request, and the fifth request do not carry the first configuration information and do not carry the second configuration information. The specific processing flow will not be repeated here.

The first request may carry second indication information, the second indication information including identification information corresponding to one or more devices that need to be triggered; the one or more devices that need to be triggered include the terminal device. The description for the second indication information is the same as that in the aforementioned embodiment, and will not be repeated.

In an embodiment, the first request may further carry the first configuration information, the first configuration information being used for determining the waiting duration. Since the core network device has previously generated the first configuration information and transmitted the first configuration information to the terminal device, the core network device may obtain, in response to receiving the second request, the first configuration information corresponding to the terminal device stored in itself, and transmit the first request carrying the first configuration information to the access network device.

In the present embodiment, the access network device may determine the duration for waiting for the data reported by the terminal device based on the first response duration in the first configuration information. If the duration is exceeded, the access network device may no longer continue to wait for the data reported by the terminal device. The duration for waiting for the data reported by the terminal device may be greater than the first response duration. For example, it may be a duration of adding a third specified duration to the first response duration. The third specified duration may be preset and is not limited here. Alternatively, the duration for waiting for the data reported by the terminal device may be equal to the first response duration.

In another embodiment, the first request may not carry the first configuration information. This is because the core network device has transmitted the first configuration information to the terminal device in advance, so there is no need to transmit the first configuration information to the access network device again, and the terminal device itself determines the first time point for reporting data. In the present embodiment, in response to that the second request is received, the core network device transmits a first request that does not carry the first configuration information to the access network device. In the present embodiment, the access network device may continuously wait for the terminal device to report the data.

After receiving the first request, the access network device may transmit the trigger signal to the terminal device. In the present embodiment, the trigger signal does not carry the first configuration information. The trigger signal is one of a paging message or a broadcast signal. Optionally, the trigger signal is a paging message. Specifically, the trigger signal may reuse the paging message in the related art, that is, a trigger signal for triggering the terminal device to report data is added to the paging message. If the trigger signal is a paging message, the trigger signal is a signal that may be received by the corresponding device. Optionally, the trigger signal is a broadcast signal. In this case, the broadcast signal may be a signal different from a broadcast signal specified in the relevant protocol. If the trigger signal is a broadcast signal, then the trigger signal is a signal that may be received by all devices within the coverage range of the access network device. The detailed description for whether the trigger signal is a paging message or a broadcast signal is the same as that in the aforementioned embodiment, and thus will not be repeated herein.

The above has described the processing in which the core network device transmits a first request, and the access network device transmits a trigger signal to the terminal device after receiving the first request. After the AS of the terminal device receives the trigger signal transmitted by the access network device, data collection and processing may be performed to obtain data, and then the terminal device reports the data at the first time point. That is, the terminal device may collect data as long as it receives the trigger signal, and then report the collected data only at the first time point. Here, the manner in which the terminal device performs data collection and processing to obtain data is the same as in the aforementioned embodiment, and will not be described repeatedly.

The terminal device reports data at the first time point, which may be: the NAS of the terminal device establishing a NAS connection with the core network device at the first time point, and reporting the data to the core network device via the NAS connection. Alternatively, the terminal device reports data at the first time point, which may be: the AS of the terminal device reporting the data to the access network device at the first time point.

Correspondingly, the core network device receiving the data reported by the terminal device includes: the core network device establishing a NAS connection with the terminal device, and receiving the data reported by the terminal device via the NAS connection; or the core network device receiving the data reported by the terminal device through the access network device.

The first time point is a time point obtained by adding the waiting duration to a receiving time point of the trigger signal. That is, the terminal device obtains the first time point by adding the waiting duration to the receiving time point of the trigger signal.

Whether the terminal device reports data from NAS to the core network device or from AS to the access network device may be pre-configured or determined by the terminal device itself, the detailed description is the same as that in the previous embodiment, and will not be repeated here.

In an embodiment, the terminal device reporting data at a first time point includes: the NAS of the terminal device establishing a NAS connection with the core network device at the first time point, and reporting the data to the core network device via the NAS connection. Correspondingly, the core network device receiving the data reported by the terminal device includes: the core network device establishing a NAS connection with the terminal device, and receiving the data reported by the terminal device via the NAS connection.

The establishing of the NAS connection with the core network device and the establishing of the NAS connection between the core network device and the terminal device may be that the terminal device and the core network device establish a NAS connection by performing a service request process between the terminal device and the core network device. The specific processing of performing the service request process between the terminal device and the core network device is not limited in the present embodiment.

It should be pointed out that, the NAS of the terminal device may determine the waiting duration based on the first configuration information after the AS of the terminal device receives the trigger signal; or the NAS of the terminal device may have determined the waiting duration based on the first configuration information after the NAS of the terminal device receives the first configuration information and before the AS of the terminal device receives the trigger signal. The description for the waiting duration and the description for the NAS of the terminal device determining the waiting duration based on the first configuration information have been described in detail in the aforementioned embodiments, and will not be repeated here.

Furthermore, if the terminal device determines to report the data to the core network device via the NAS, then after the AS of the terminal device receives the trigger signal transmitted by the access network device, the method may further include: the NAS of the terminal device obtaining the first time point by adding the waiting duration to the receiving time point of the trigger signal.

On the core network device side of the embodiment, a receiving time point of the data is at or after a time point obtained by adding the waiting duration to a transmitting time point of the first request. Since the terminal device reports data directly to the core network device, and the terminal device reports the data at the first time point obtained by adding a waiting duration to the receiving time point of the trigger signal, the duration between the time point when the core network device transmits the first request and the time point when the data is received must be not less than the aforementioned waiting duration. Specifically, the receiving time point of the data may be equal to a time point obtained by adding the waiting duration to the transmitting time point of the first request; alternatively, due to the delay caused by the transmission or the delay caused by other network requests, the receiving time point of the data may be later than the time point obtained by adding the waiting duration to the transmitting time point of the first request. Regardless of the above situation, the time point when the data reported by the terminal device is received on the core network device side is no earlier than the time point obtained by adding the waiting duration to the transmitting time point of the first request.

In the present embodiment, the core network device may also determine the waiting duration, and the processing may include: determining the waiting duration based on the first configuration information. It should be understood that the processing of determining the waiting duration by the core network device is the same as the processing of determining the waiting duration by the NAS or AS of the terminal device based on the first configuration information. For example, if the terminal device adopts the default first policy, the core network device may also adopt the same default first policy accordingly, which will not be elaborated here.

In an embodiment, the terminal device reporting data at a first time point includes: the AS of the terminal device reporting the data to an access network device at the first time point.

Correspondingly, the processing of the access network device may include: the access network device receiving data reported by the terminal device, and transmitting the data to the core network device.

The processing of the core network device includes: the core network device receiving the data reported by the terminal device. Specifically, the core network device receiving the data reported by the terminal device includes: the core network device receiving the data reported by the terminal device through the access network device.

In the present embodiment, in response to that the NAS of the terminal device receives the first configuration information, the NAS of the terminal device may transmit the first configuration information to the AS of the terminal device. Alternatively, in response to that the AS of the terminal device receives a trigger signal, the NAS of the terminal device transmits the first configuration information to the AS of the terminal device. Alternatively, in response to that the AS of the terminal device receives a trigger signal, the AS of the terminal device obtains the first configuration information from the NAS of the terminal device.

In response to that the NAS of the terminal device receives the first configuration information and transmits the first configuration information to the AS of the terminal device, the AS of the terminal device determines the waiting duration based on the first configuration information after the AS of the terminal device receives the trigger signal. Alternatively, the AS of the terminal device determines the waiting duration based on the first configuration information immediately when receiving the first configuration information.

In response to that the AS of the terminal device receives a trigger signal, the NAS of the terminal device transmits the first configuration information to the AS of the terminal device, the AS of the terminal device determines the waiting duration based on the first configuration information immediately when receiving the first configuration information. The description for the waiting duration and the description for the AS of the terminal device determining the waiting duration based on the first configuration information have been described in detail in the above embodiments, and will not be repeated here.

Further, if the terminal device determines to report data to the access network device via the AS, then after the AS of the terminal device receives the trigger signal transmitted by the access network device, the method may further include: the AS of the terminal device obtaining the first time point by adding the waiting duration to the receiving time point of the trigger signal.

The AS of the terminal device reports data to the access network device at the first time point. Correspondingly, the access network device receives the data reported by the terminal device and transmits the data to the core network device. Specifically, in response to that the access network device receives the data reported by the terminal device, the access network device directly transmits the data to the core network device. That is, as long as the access network device receives data reported by the terminal device, the access network device transmits the data to the core network device.

In the present embodiment, in the processing of the access network device transmitting the data to the core network device, the transmitting time point of the data may be at or after the time point obtained by adding the waiting duration to the transmitting time point of the trigger signal. Since the terminal device reports the data at the first time point obtained by adding the waiting duration to the receiving time point of the trigger signal, the duration between the time point when the access network device transmits the trigger signal and the time point when the data is transmitted must be no less than the waiting duration. Specifically, the transmitting time point of the data may be equal to a time point obtained by adding the waiting duration to the transmitting time point of the trigger signal, or the transmitting time point of the data may be later than the time point obtained by adding the waiting duration to the transmitting time point of the trigger signal. Regardless of the above situations, the time point when the access network device transmits the data to the core network device is no earlier than the time point obtained by adding the waiting duration to the transmitting time point of the trigger signal.

The core network device receives the data reported by the terminal device through the access network device. Similarly, on the core network device side, the receiving time point of the data is at or after the time point obtained by adding the waiting duration to the transmitting time point of the first request. This is, since the terminal device reports the data at the first time point obtained by adding the waiting duration to the receiving time point of the trigger signal, the time point when the access network device transmits data to the core network device is also at or after the time point obtained by adding the waiting duration to the transmitting time point of the trigger signal. Accordingly, the duration between the transmitting time point of the first request transmitted by the core network device and the receiving time point of the data must be no less than the aforementioned waiting duration. Specifically, the receiving time point of the data may be equal to the time point obtained by adding the waiting duration to the transmitting time point of the first request; alternatively, due to the delay caused by the transmission or the delay caused by other network requests, the receiving time point of the data may be later than the time point obtained by adding the waiting duration to the transmitting time point of the first request. Regardless of the above situations, the time point when data is received on the core network device side is no earlier than the time point obtained by adding the waiting duration to the transmitting time point of the first request.

In the present embodiment, if the first request received by the access network device carries the first configuration information, the processing of the access network device may further include: determining the waiting duration based on the first configuration information. Similarly, the processing of the core network device may further include: determining the waiting duration based on the first configuration information. Furthermore, the access network device waits for receiving the data reported by the terminal device before the time point obtained by adding the waiting duration to the transmitting time point of the trigger signal, and will no longer wait for the data reported by the terminal device during the rest of the time. The processes of determining the waiting duration by the access network device and determining the waiting duration by the core network device should be the same as the processing of determining the waiting duration by the terminal device, which will not be elaborated on.

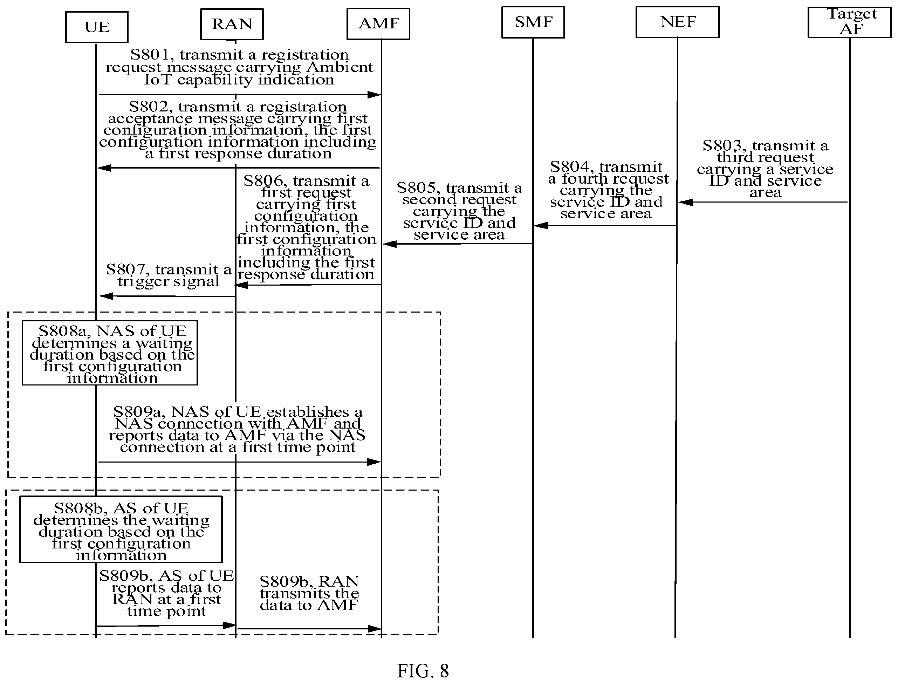

In conjunction with FIG. 8, considering examples in which the terminal device is a UE, in an example, the UE may be a zero-power consumption terminal device, such as a zero-power consumption IoT UE or a zero-power consumption AIoT UE, and the access network device is a radio access network, the core network device is an AMF, and other core network devices include a NEF and an SMF, another exemplary description of the communication method provided by the aforementioned implementation includes the following contents.

In S801, a UE transmits a registration request message to an AMF, the registration request message carrying an Ambient IoT capability indication. The indication may be a bit in a 5GMM capability parameter. For example, a value of 0 for the bit indicates that the Ambient IoT capability is not supported, and a value of 1 for the bit indicates that the Ambient IoT capability is supported.

In S802, the AMF transmits a registration acceptance message to the UE, the registration acceptance message carrying first configuration information, and the first configuration information including a first response duration.

Furthermore, the first configuration information may further include first indication information, the first indication information being used for indicating generation of a random number based on the first response duration.

Specifically, in response to that the AMF determines that the UE supports capability of IoT data collection based on capability information of the UE, the AMF determines whether to authorize the UE to access the network as an Ambient IoT terminal based on contract information of the UE; if authorization is determined, AMF carries the first configuration information in the registration acceptance message, the first configuration information carrying the first response duration, which may also be referred to as a first response time range.

Exemplarily, the first response duration (i.e., the first response time range) may be measured in milliseconds, and is used to indicate the time range before the UE replies to the trigger signal, thereby achieving a purpose of staggering the reply times of different UEs to avoid congestion. In addition, the first configuration information may further include an indication of whether the UE needs to generate a random number. If there is no such indication, the UE directly uses the range as the waiting duration.

Furthermore, if the UE does not need to perform the service request process and may directly reply data in the AS, the NAS of the UE will transmit the first configuration information to the AS of the UE.

In S803, in a case where there is a data collection requirement, a target AF transmits a third request to a NEF, the third request carrying a service ID and a service area.

In some possible examples, the third request may also be referred to as a data collection request.

In S804, the NEF transmits a fourth request to an SMF, the fourth request carrying the service ID and the service area.

Specifically, the NEF determines whether the service indicated by the target AF or service ID is allowed to perform service via 5GC. If allowed, the NEF selects the corresponding SMF according to the service ID and service area, and transmits the third request to the SMF.

In S805, the SMF transmits a second request to the AMF, the second request carrying the service ID and the service area.

Specifically, the SMF selects the corresponding AMF according to the service ID and service area in the second request and the first correspondence previously stored, and transmits the second request to the AMF, the request carrying the service ID and service area.

In S806, the AMF transmits a first request to a RAN, the first request carrying the first configuration information, and the first configuration information including the first response duration.

Specifically, the AMF transmits the first request to the RAN within the service area.

The first request is used to trigger the RAN to collect data. Specifically, the first request is used to trigger the RAN to transmit a trigger signal. The first response duration may be used to indicate a time allowed for the RAN to wait for a response from the UE. The first configuration information in the first request may further carry first indication information, and the first indication information may also be referred to as AioT indication. The first indication information is used to indicate the AioT UE that the RAN needs to trigger. Specifically, the first indication information includes UE ID corresponding to one or more AioT UEs that need to be triggered.

It should also be pointed out that, in another example, the first request may be used only to indicate the RAN to transmit a trigger signal, that is, the first request may not carry the first indication information, and may not carry the first configuration information.

In S807, the RAN transmits a trigger signal.

Specifically, if the first request includes UE ID of one or more AioT UEs that need to be triggered, the trigger signal may be transmitted to the corresponding one or more AioT UEs. The one or more AioT UEs may include the UE.

The trigger signal may be a reused existing paging message or a new broadcast signal.

After completing S807, the processing on the UE side may include: the UE determining the waiting duration based on the first configuration information, and reporting the data. Specifically, the UE may perform S808a and S809a, or perform S808b and S809b.

In a case, in S808a, if the UE needs to perform a service request process subsequently, a NAS of the UE determines the waiting duration based on the first configuration information. Further, the NAS of the UE obtains a first time point by adding the waiting duration to the receiving time point of the trigger signal. The specific method for determining the waiting duration has been described in detail in the above embodiment and will not be repeated here.

In S809a, at a first time point, the NAS of the UE establishes a NAS connection with the AMF and reports the data to the AMF via the NAS connection.

In another case, in S808b, if the UE does not need to perform the service request process subsequently, the AS of the UE determines the waiting duration based on the first configuration information. Further, the AS of the UE obtains the first time point by adding the waiting duration to the receiving time point of the trigger signal. The specific method for determining the waiting duration has been described in detail in the above embodiment and will not be repeated here.

In S809b, an AS of the UE reports the data to the RAN at the first time point, and the RAN transmits the data to the AMF.

It should be understood that after the S809a is completed, or after the S809b is completed, the AMF may further transmit the data to the target AF through the NEF and SMF. This part of process is not illustrated in FIG. 8 for the sake of brevity.

In combination with the above implementation, after receiving the trigger signal, the terminal device will report data only in response to that the first time point arrives. In this way, the terminal device does not report data immediately after receiving the trigger signal, and the terminal device may determine the waiting duration by itself. Therefore, the time point when the network side receives the data reported by the terminal device may also be different, thereby avoiding the problems of network congestion or paralysis caused by receiving a large amount of data from terminals on the network side at the same time, and ensuring that the data reported by the terminal device is received normally on the network side.

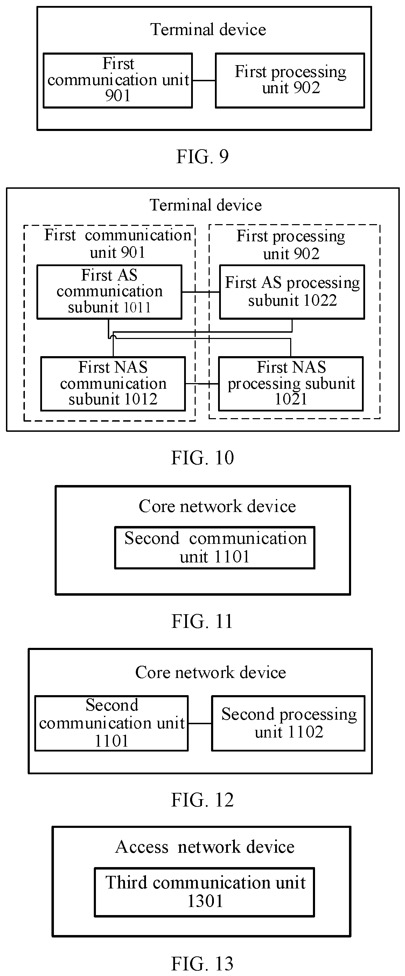

FIG. 9 is a schematic diagram of a composition structure of a terminal device according to an embodiment of the present disclosure, the terminal device includes:
a first communication unit 901, configured to receive a trigger signal and report data; and
a first processing unit 902, configured to control the first communication unit to report the data at a first time point, the first time point being related to a waiting duration.

The first time point is a time point obtained by adding the waiting duration to a receiving time point of the trigger signal.

As shown in FIG. 10, the first communication unit 901 includes: a first AS communication subunit 1011 configured to receive the trigger signal transmitted by an access network device.

It should be noted that the first AS communication subunit may be a communication subunit in the AS of the terminal device.

The trigger signal carries first configuration information, and the first configuration information is used for determining the waiting duration.

The first processing unit 902 includes: a first NAS processing subunit 1021 configured to determine the waiting duration based on the first configuration information.

The first AS communication subunit 1011 is configured to transmit the first configuration information to the first NAS processing subunit.

It should be noted that the first NAS processing subunit may be a processing subunit in the NAS of the terminal device. The first AS communication subunit may be a communication subunit in the AS of the terminal device.

The first communication unit is configured to receive the first configuration information before receiving the first configuration information, the first configuration information being used for determining the waiting duration.

The first communication unit is configured to transmit capability information before receiving the first configuration information, the capability information being used for indicating whether the terminal device supports an Ambient power enabled Internet of Things (IoT) capability.

The first communication unit 901 includes: a first NAS communication subunit 1012 configured to receive the first configuration information transmitted by a core network device.

It should be noted that the first NAS communication subunit may be a communication subunit in the NAS of the terminal device.

The first NAS communication subunit is configured to transmit a registration request message to the core network device, the registration request message carrying the capability information.

The first NAS communication subunit is configured to receive a registration acceptance message transmitted by the core network device, the registration acceptance message carrying the first configuration information.

The first NAS communication subunit is configured to receive a NAS message transmitted by the core network device after the terminal device completes registration, the NAS message carrying the first configuration information.

The first processing unit 902 includes: a first NAS processing subunit 1021 configured to determine the waiting duration based on the first configuration information.

The first processing unit 902 further includes: a first AS processing subunit 1022 configured to obtain the first configuration information from the first NAS communication subunit.

The first NAS communication subunit 1012 is configured to transmit the first configuration information to the first AS communication subunit.

The first processing unit further includes: a first AS processing subunit configured to determine the waiting duration based on the first configuration information.

The first communication unit includes: a first NAS communication subunit configured to establish a NAS connection with a core network device at a first time point, and report the data to the core network device via the NAS connection.

The first communication unit includes: the first AS communication subunit configured to report the data to the access network device at the first time point.

The first configuration information includes a first response duration.

The first configuration information further includes first indication information, the first indication information is used for indicating generation of a random number based on the first response duration.

The waiting duration is equal to the first response duration.

The waiting duration is the first random number determined based on the first response duration, the first random number is less than or equal to the first response duration.

The trigger signal is one of a paging message or a broadcast signal.

The terminal device is an Internet of Things (IoT) terminal device, or an Ambient IoT terminal device.

The core network device is an access and mobility management function (AMF).

The terminal device in the embodiment of the present disclosure may implement the corresponding functions of the terminal device in the method embodiments. The processes, functions, implementations and beneficial effects corresponding to each module (sub-module, unit or component, etc.) in the terminal device may be found in the corresponding description in the above method embodiment, and will not be repeated here. The functions described in the each module (sub-module, unit or component, etc.) in the terminal device of the application embodiment may be implemented by different modules (sub-modules, units or components, etc.) or by the same module (sub-module, unit or component, etc.).

FIG. 11 is a schematic diagram of a composition structure of a core network device according to an embodiment of the present disclosure, and the core network device includes:
a second communication unit 1101 configured to: transmit a first request to an access network device, the first request being used to indicate the access network device to transmit a trigger signal; and receive data reported by a terminal device, a receiving time point of the data being related to a waiting duration.

The receiving time point of the data is at or after a time point obtained by adding the waiting duration to a transmitting time point of the first request.

The second communication unit is configured to transmit the first request to the access network device in response to receiving a second request, the second request being used to indicate the transmitting of the first request.

The first request carries second indication information, the second indication information includes identification information corresponding to one or more devices that need to be triggered; the one or more devices that need to be triggered include the terminal device.

The first request carries first configuration information, and the first configuration information is used for determining the waiting duration.

The second request carries the first configuration information; or the second request carries second configuration information, the second configuration information being related to the first configuration information.

The second communication unit is configured to transmit the first configuration information to the terminal device before transmitting the first request to the access network device; the first configuration information is used for determining the waiting duration.

The second communication unit is configured to receive capability information of the terminal device before transmitting the first configuration information to the terminal device, the capability information of the terminal device being used for indicating whether the terminal device supports an Ambient power enabled Internet of Things (IoT) capability.

The second communication unit is configured to receive a registration request message transmitted by the terminal device, the registration request message carrying the capability information of the terminal device.

As shown in FIG. 12, the core network device further includes: a second processing unit 1102 configured to transmit a registration acceptance message to the terminal device through the second communication unit in response to that it is determined that the terminal device supports the Ambient IoT capability based on the capability information of the terminal device, the registration acceptance message carrying the first configuration information.

The second communication unit 1101 is configured to transmit the registration acceptance message to the terminal device.

The second communication unit is configured to transmit a NAS message to the terminal device after the terminal device completes registration, the NAS message carrying the first configuration information.

The second communication unit is configured to establish a NAS connection with the terminal device and receive the data reported by the terminal device via the NAS connection; or receive the data reported by the terminal device through the access network device.

The first configuration information includes a first response duration.

The first configuration information further includes first indication information, the first indication information is used for indicating generation of a random number based on the first response duration.

The waiting duration is equal to the first response duration.

The waiting duration is the first random number determined based on the first response duration, the first random number is less than or equal to the first response duration.

The terminal device is an Internet of Things (IoT) terminal device, or an Ambient IoT terminal device.

The core network device is an access and mobility management function (AMF).

The core network device in the embodiment of the present disclosure may implement the corresponding functions of the core network device in the method embodiments. The processes, functions, implementations and beneficial effects corresponding to each module (sub-module, unit or component, etc.) in the core network device may be found in the corresponding description in the above method embodiment, and will not be repeated here. The functions described in each module (sub-module, unit or component, etc.) in the core network device of the application embodiment may be implemented by different modules (sub-modules, units or components, etc.) or by the same module (sub-module, unit or component, etc.).

FIG. 13 is a schematic diagram of a composition structure of an access network device according to an embodiment of the present disclosure, and the access network device includes:
a third communication unit 1301 configured to transmit a trigger signal, and receive data reported by a terminal device, and transmit the data to a core network device, a transmitting time point of the data being related to a waiting duration.

The transmitting time point of the data is at or after a time point obtained by adding the waiting duration to a transmitting time point of the trigger signal.

The third communication unit is configured to transmit the trigger signal to the terminal device in response to receiving a first request transmitted by the core network device.

The first request carries second indication information, the second indication information includes identification information corresponding to one or more devices that need to be triggered; the one or more devices that need to be triggered include the terminal device.

The first request carries first configuration information, and the first configuration information is used for determining the waiting duration.

The trigger signal carries the first configuration information.

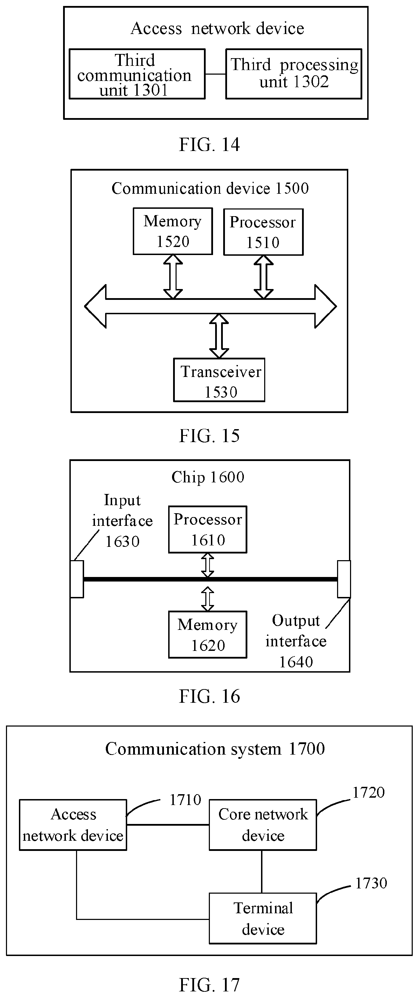

As shown in FIG. 14, the access network device further includes: a third processing unit 1302 configured to determine the waiting duration based on the first configuration information.

The third communication unit is configured to receive data reported by a terminal device, and transmit the data to a core network device in response to that a transmitting time point of the data arrives.

The first configuration information includes a first response duration.

The first configuration information further includes first indication information, the first indication information is used for indicating generation of a random number based on the first response duration.

The waiting duration is equal to the first response duration.

The waiting duration is a first random number determined based on the first response duration, the first random number is less than or equal to the first response duration.

The terminal device is an Internet of Things (IoT) terminal device, or an Ambient power enabled Internet of Things terminal.

The core network device is an AMF.

The trigger signal is one of a paging message or a broadcast signal.

The access network device in the embodiment of the present disclosure may implement the corresponding functions of the access network device in the method embodiments. The processes, functions, implementations and beneficial effects corresponding to each module (sub-module, unit or component, etc.) in the access network device may be found in the corresponding description in the above method embodiments, and will not be repeated here. The functions described in each module (sub-module, unit or component, etc.) in the access network device of the application embodiment may be implemented by different modules (sub-modules, units or components, etc.) or by the same module (sub-module, unit or component, etc.).

FIG. 15 is a schematic block diagram of a communication device 1500 according to the embodiments of the present disclosure. The communication device 1500 includes a processor 1510, and the processor 1520 may call and run a computer program from a memory to enable the communication device 1500 to implement the method in the embodiments of the present disclosure.

In a possible implementation, the communication device 1500 may further include a memory 1520. The processor 1510 may call and run a computer program from the memory 1520 to enable the communication device 1500 to implement the method in the embodiments of the present disclosure.

The memory 1520 may be a separate device independent from the processor 1510, or may be integrated into the processor 1510.

In a possible implementation, the communication device 1500 may further include a transceiver 1530. The processor 1510 may control the transceiver 1530 to communicate with other devices, and specifically, to transmit information or data to other devices, or receive information or data transmitted by other devices.

The transceiver 1530 may include a transmitter and a receiver. The transceiver 1530 may further include an antenna (antennas), and the number of the antennas may be one or more.

In a possible implementation, the communication device 1500 may be an access network device in the embodiments of the present disclosure, and the communication device 1500 may implement the corresponding processing implemented by the access network device in various methods of the embodiments of the present disclosure, which will not be repeated here for the sake of brevity. In a possible implementation, the communication device 1500 may be a core network device in the embodiments of the present disclosure, and the communication device 1500 may implement the corresponding processing implemented by the core network device in various methods of the embodiments of the present disclosure, which will not be repeated here for the sake of brevity. In a possible implementation, the communication device 1500 may be a terminal device in the embodiments of the present disclosure, and the communication device 1500 may implement the corresponding processing implemented by the terminal device in various methods of the embodiments of the present disclosure, which will not be repeated here for the sake of brevity.

FIG. 16 is a schematic block diagram of a chip 1600 according to the embodiments of the present disclosure. The chip 1600 includes a processor 1610. The processor 1610 may call and run a computer program from a memory to implement the method in the embodiments of the present disclosure.

In a possible implementation, the chip 1600 may further include a memory 1620. The processor 1610 may call and run a computer program from the memory 1620 to implement the method performed by the access network device or the core network device in the embodiments of the present disclosure.

The memory 1620 may be a separate device independent of the processor 1610, or may be integrated into the processor 1610.

In a possible implementation, the chip 1600 may further include an input interface 1630. The processor 1610 may control the input interface 1630 to communicate with other devices or chips, and specifically, to acquire information or data transmitted by other devices or chips.

In a possible implementation, the chip 1600 may further include an output interface 1640. The processor 1610 may control the output interface 1640 to communicate with other devices or chips, and specifically, to output information or data to other devices or chips.

In a possible implementation, the chip may be applied to the access network device in the embodiments of the present disclosure, and the chip may implement the corresponding processing implemented by the access network device in the various methods of the embodiments of the present disclosure, which will not be repeated here for the sake of brevity. In a possible implementation, the chip may be applied to the core network device in the embodiments of the present disclosure, and the chip may implement the corresponding processing implemented by the core network device in the various methods of the embodiments of the present disclosure, which will not be repeated here for the sake of brevity. In a possible implementation, the chip may be applied to the terminal device in the embodiments of the present disclosure, and the chip may implement the corresponding processing implemented by the terminal device in the various methods of the embodiments of the present disclosure, which will not be repeated here for the sake of brevity.

The chips used in the access network device, the core network device, and the terminal device may be the same chip or different chips.

It should be understood that the chip mentioned in the embodiments of the present disclosure may also be called a system on chip, a system chip, a chip system or a system-on-chip chip, etc.

The above-mentioned processor may be a general-purpose processor, a digital signal processor (DSP), a field programmable gate array (FPGA), an application specific integrated circuit (ASIC) or other programmable logic devices, transistor logic devices, discrete hardware components, or the like. The above-mentioned general-purpose processor may be a microprocessor, or may also be any conventional processor.

The above-mentioned memory may be a volatile (transitory) memory or a non-volatile (non-transitory) memory, or may include both volatile and non-volatile memories. Here, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be random access memory (RAM).

It may be understood that the above-mentioned memory is exemplary but not restrictive. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct rambus random access memory (direct rambus RAM, DR RAM), or the like. That is, the memories in the embodiments of the present disclosure are intended to include but are not limited to these and any other suitable types of memory.

FIG. 17 is a schematic block diagram of a communication system 1700 according to the embodiments of the present disclosure. The communication system 1700 includes an access network device 1710, a core network device 1720, and a terminal device 1730.

The access network device 1710 may be used to implement the corresponding functions implemented by the access network device in the above-mentioned methods, the core network device 1720 may be used to implement the corresponding functions implemented by the core network device in the above-mentioned methods, and the terminal device 1730 may be used to implement the corresponding functions implemented by the terminal device in the above-mentioned methods, which will not be repeated here for brevity.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instruction(s) are loaded on and executed by a computer, processes or functions in accordance with the embodiments of the present disclosure are generated in whole or in part. The computer may be a general-purpose computer, a dedicated computer, a computer network, or any other programmable device. The computer instruction(s) may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium able to be accessed by the computer, or may be a data storage device, such as a server or data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It may be understood that in the various embodiments of the present disclosure, the magnitude of the serial numbers of the above-mentioned processes does not mean the order of execution. The execution order of each process should be determined by its function and internal logic, and should not constitute any limitation on the implementation processing of the embodiments of the present disclosure.

Those skilled in the art may clearly understand that, for the convenience and brevity of description, the specific working processes of the systems, devices and units described above may refer to the corresponding processes in the aforementioned method embodiments and will not be repeated here.

The above description is only specific implementation of the present disclosure, but the protection scope of the present disclosure is not limited thereto. Any person skilled in the art may readily conceive of variations or substitutions within the technical scope disclosed in the present disclosure, which should be included within the protection scope of the present disclosure. Therefore, the protection scope of the present disclosure shall be subject to the protection scope of the claims.

## Claims

1. A communication method, comprising:
receiving, by a terminal device, a trigger signal; and
reporting, by the terminal device, data at a first time point, wherein the first time point is related to a waiting duration.

2. The method according to claim 1, wherein the first time point is a time point obtained by adding the waiting duration to a receiving time point of the trigger signal.

3. The method according to claim 2, wherein receiving, by the terminal device, the trigger signal comprises:
receiving, by an access stratum (AS) of the terminal device, the trigger signal transmitted by an access network device.

4. The method according to any one of claims 1 to 3, wherein the trigger signal carries first configuration information, the first configuration information being used for determining the waiting duration.

5. The method according to claim 4, wherein the method further comprises:
transmitting, by an AS of the terminal device, the first configuration information to a non-access stratum (NAS) of the terminal device; and
determining, by the NAS of the terminal device, the waiting duration based on the first configuration information.

6. The method according to any one of claims 1 to 3, wherein before receiving, by the terminal device, the trigger signal, the method further comprises:
receiving, by the terminal device, first configuration information; wherein the first configuration information is used for determining the waiting duration.

7. The method according to claim 6, wherein before receiving, by the terminal device, the first configuration information, the method further comprises:
transmitting, by the terminal device, capability information, wherein the capability information is used for indicating whether the terminal device supports an Ambient power enabled Internet of Things (IoT) capability.

8. The method according to claim 7, wherein receiving, by the terminal device, first configuration information comprises:
receiving, by a NAS of the terminal device, the first configuration information transmitted by a core network device.

9. The method according to claim 8, wherein transmitting, by the terminal device, the capability information comprises:
transmitting, by the NAS of the terminal device, a registration request message to the core network device; wherein the registration request message carries the capability information.

10. The method according to claim 9, wherein receiving, by the NAS of the terminal device, the first configuration information transmitted by the core network device comprises:
receiving, by the NAS of the terminal device, a registration acceptance message transmitted by the core network device; wherein the registration acceptance message carries the first configuration information.

11. The method according to claim 8, wherein receiving, by the NAS of the terminal device, the first configuration information transmitted by the core network device comprises:
after the terminal device completes registration, receiving, by the NAS of the terminal device, a NAS message transmitted by the core network device; wherein the NAS message carries the first configuration information.

12. The method according to any one of claims 8 to 11, wherein the method further comprises:
determining, by the NAS of the terminal device, the waiting duration based on the first configuration information.

13. The method according to any one of claims 8 to 11, wherein the method further comprises:
transmitting, by the NAS of the terminal device, the first configuration information to an AS of the terminal device.

14. The method according to claim 4 or 13, wherein the method further comprises:
determining, by an AS of the terminal device, the waiting duration based on the first configuration information.

15. The method according to claim 5 or 12, wherein reporting, by the terminal device, the data at the first time point comprises:
establishing, by the NAS of the terminal device, a NAS connection with a core network device at the first time point; and reporting, by the NAS of the terminal device, the data to the core network device via the NAS connection.

16. The method according to claim 14, wherein reporting, by the terminal device, the data at the first time point comprises:
reporting, by the AS of the terminal device, the data to an access network device at the first time point.

17. The method according to any one of claims 5, 12 and 14, wherein the first configuration information comprises a first response duration.

18. The method according to claim 17, wherein the first configuration information further comprises first indication information, the first indication information being used for indicating generation of a random number based on the first response duration.

19. The method according to claim 17, wherein the waiting duration is equal to the first response duration.

20. The method according to claim 17 or 18, wherein the waiting duration is a first random number determined based on the first response duration, the first random number being less than or equal to the first response duration.

21. The method according to any one of claims 1 to 20, wherein the trigger signal is one of: a paging message, or a broadcast signal.

22. The method according to any one of claims 1 to 21, wherein the terminal device is an Internet of Things (IoT) terminal device, or an Ambient IoT terminal device.

23. The method according to any one of claims 8 to 11 and 15, wherein the core network device is an access and mobility management function (AMF).

24. A communication method, comprising:
transmitting, by a core network device, a first request to an access network device; wherein the first request is used to indicate the access network device to transmit a trigger signal; and
receiving, by the core network device, data reported by a terminal device; wherein a receiving time point of the data is related to a waiting duration.

25. The method according to claim 24, wherein the receiving time point of the data is at or after a time point obtained by adding the waiting duration to a transmitting time point of the first request.

26. The method according to claim 24 or 25, wherein transmitting, by the core network device, the first request to the access network device comprises:
in response to that the core network device receives a second request, transmitting, by the core network device, the first request to the access network device; wherein the second request is used to indicate the core network device to transmit the first request.

27. The method according to claim 26, wherein the first request carries second indication information, and the second indication information comprises identification information corresponding to one or more devices that need to be triggered; the one or more devices that need to be triggered comprising the terminal device.

28. The method according to claim 26 or 27, wherein the first request carries first configuration information, the first configuration information being used for determining the waiting duration.

29. The method according to claim 28, wherein the second request carries the first configuration information; or the second request carries second configuration information, the second configuration information being related to the first configuration information.

30. The method according to any one of claims 26 to 28, wherein before transmitting, by the core network device, the first request to the access network device, the method further comprises:
transmitting, by the core network device, the first configuration information to the terminal device; wherein the first configuration information is used for determining the waiting duration.

31. The method according to claim 30, wherein before transmitting, by the core network device, the first configuration information to the terminal device, the method further comprises:
receiving, by the core network device, capability information of the terminal device, wherein the capability information of the terminal device is used for indicating whether the terminal device supports an Ambient power enabled Internet of Things (IoT) capability.

32. The method according to claim 31, wherein receiving, by the core network device, the capability information of the terminal device comprises:
receiving, by the core network device, a registration request message transmitted by the terminal device; wherein the registration request message carries the capability information of the terminal device.

33. The method according to claim 32, wherein transmitting, by the core network device, the first configuration information to the terminal device comprises:
in response to that the core network device determines that the terminal device supports the Ambient IoT capability based on the capability information of the terminal device, transmitting, by the core network device, a registration acceptance message to the terminal device; wherein the registration acceptance message carries the first configuration information.

34. The method according to claim 30 or 31, wherein transmitting, by the core network device, the registration acceptance message to the terminal device comprises:
after the terminal device completes registration, transmitting, by the core network device, a NAS message to the terminal device; wherein the NAS message carries the first configuration information.

35. The method according to any one of claims 24 to 34, wherein receiving, by the core network device, the data reported by the terminal device comprises:
establishing, by the core network device, a NAS connection with the terminal device; and receiving, by the core network device, the data reported by the terminal device via the NAS connection; or
receiving, by the core network device, the data reported by the terminal device through the access network device.

36. The method according to claim 28 or 30, wherein the first configuration information comprises a first response duration.

37. The method according to claim 36, wherein the first configuration information further comprises first indication information, the first indication information being used for indicating generation of a random number based on the first response duration.

38. The method according to claim 36, wherein the waiting duration is equal to the first response duration.

39. The method according to claim 36 or 37, wherein the waiting duration is a first random number determined based on the first response duration, the first random number being less than or equal to the first response duration.

40. The method according to any one of claims 24 to 39, wherein the terminal device is an Internet of Things (IoT) terminal device, or an Ambient IoT terminal device.

41. The method according to any one of claims 24 to 40, wherein the core network device is an access and mobility management function (AMF).

42. A communication method, comprising:
transmitting, by an access network device, a trigger signal; and
receiving, by the access network device, data reported by a terminal device; and transmitting, by the access network device, the data to a core network device; wherein a transmitting time point of the data is related to a waiting duration.

43. The method according to claim 42, wherein the transmitting time point of the data is at or after a time point obtained by adding the waiting duration to a transmitting time point of the trigger signal.

44. The method according to claim 42 or 43, wherein transmitting, by the access network, the trigger signal comprises:
in response to that the access network device receives a first request transmitted by the core network device, transmitting, by the access network device, the trigger signal to the terminal device.

45. The method according to claim 44, wherein the first request carries second indication information, and the second indication information comprises identification information corresponding to one or more devices that need to be triggered; the one or more devices that need to be triggered comprising the terminal device.

46. The method according to claim 44 or 45, wherein the first request carries first configuration information, the first configuration information being used for determining the waiting duration.

47. The method according to claim 46, wherein the trigger signal carries the first configuration information.

48. The method according to claim 46, wherein the method further comprises:
determining, by the access network device, the waiting duration based on the first configuration information.

49. The method according to claim 48, wherein receiving, by the access network device, the data reported by the terminal device, and transmitting the data to the core network device comprises:
receiving, by the access network device, the data reported by the terminal device;
in response to that the transmitting time point of the data arrives, transmitting, by the access network device, the data to the core network device.

50. The method according to claim 48, wherein the first configuration information comprises a first response duration.

51. The method according to claim 50, wherein the first configuration information further comprises first indication information, the first indication information being used for indicating generation of a random number based on the first response duration.

52. The method according to claim 50, wherein the waiting duration is equal to the first response duration.

53. The method according to claim 50 or 51, wherein the waiting duration is a first random number determined based on the first response duration, the first random number being less than or equal to the first response duration.

54. The method according to any one of claims 42 to 53, wherein the terminal device is an Internet of Things (IoT) terminal device, or an Ambient power enabled Internet of Things terminal device.

55. The method according to any one of claims 42 to 54, wherein the core network device is an AMF.

56. The method according to any one of claims 42 to 55, wherein the trigger signal is one of: a paging message, or a broadcast signal.

57. A terminal device, comprising:
a first communication unit, configured to receive a trigger signal and report data; and
a first processing unit, configured to control the first communication unit to report the data at a first time point; wherein the first time point is related to a waiting duration.

58. The terminal device according to claim 57, wherein the first time point is a time point obtained by adding the waiting duration to a receiving time point of the trigger signal.

59. The terminal device according to claim 58, wherein the first communication unit comprises: a first AS communication subunit configured to receive the trigger signal transmitted by an access network device.

60. The terminal device according to any one of claims 57 to 59, wherein the trigger signal carries first configuration information, the first configuration information being used for determining the waiting duration.

61. The terminal device according to claim 60, wherein the first processing unit comprises: a first NAS processing subunit configured to determine the waiting duration based on the first configuration information; and
a first AS communication subunit configured to transmit the first configuration information to the first NAS processing subunit.

62. The terminal device according to any one of claims 57 to 59, wherein the first communication unit is configured to receive first configuration information before receiving the first configuration information; the first configuration information being used for determining the waiting duration.

63. The terminal device according to claim 62, wherein the first communication unit is configured to transmit capability information before receiving the first configuration information, the capability information being used for indicating whether the terminal device supports an Ambient power enabled Internet of Things (IoT) capability.

64. The terminal device according to claim 63, wherein the first communication unit comprises: a first NAS communication subunit configured to receive the first configuration information transmitted by a core network device.

65. The terminal device according to claim 64, wherein the first NAS communication subunit is configured to transmit a registration request message to the core network device; wherein the registration request message carries the capability information.

66. The terminal device according to claim 65, wherein the first NAS communication subunit is configured to receive a registration acceptance message transmitted by the core network device; wherein the registration acceptance message carries the first configuration information.

67. The terminal device according to claim 64, wherein the first NAS communication subunit is configured to receive a NAS message transmitted by the core network device after the terminal device completes registration,; wherein the NAS message carries the first configuration information.

68. The terminal device according to any one of claims 64 to 67, wherein the first processing unit comprises: a first NAS processing subunit configured to determine the waiting duration based on the first configuration information.

69. The terminal device according to any one of claims 64 to 67, wherein the first processing unit further comprises: a first AS processing subunit configured to obtain the first configuration information from the first NAS communication subunit; wherein
the first NAS communication subunit is configured to transmit the first configuration information to a first AS communication subunit.

70. The terminal device according to claim 60 or 69, wherein the first processing unit further comprises: a first AS processing subunit configured to determine the waiting duration based on the first configuration information.

71. The terminal device according to claim 61 or 68, wherein the first communication unit comprises: a first NAS communication subunit configured to establish a NAS connection with a core network device at the first time point, and report the data to the core network device via the NAS connection.

72. The terminal device according to claim 70, wherein the first communication unit comprises: a first AS communication subunit configured to report the data to an access network device at the first time point.

73. The terminal device according to any one of claims 61, 68 and 70, wherein the first configuration information comprises a first response duration.

74. The terminal device according to claim 73, wherein the first configuration information further comprises first indication information, the first indication information being used for indicating generation of a random number based on the first response duration.

75. The terminal device according to claim 73, wherein the waiting duration is equal to the first response duration.

76. The terminal device according to claim 73 or 74, wherein the waiting duration is a first random number determined based on the first response duration, the first random number being less than or equal to the first response duration.

77. The terminal device according to any one of claims 57 to 76, wherein the trigger signal is one of: a paging message, or a broadcast signal.

78. The terminal device according to any one of claims 57 to 77, wherein the terminal device is an Internet of Things (IoT) terminal device, or an Ambient IoT terminal device.

79. The terminal device according to any one of claims 64 to 67 and 71, wherein the core network device is an access and mobility management function (AMF).

80. A core network device, comprising:
a second communication unit, configured to: transmit a first request for indicating an access network device to transmit a trigger signal to the access network device, and receive data reported by a terminal device; wherein a receiving time point of the data is related to a waiting duration.

81. The core network device according to claim 80, wherein the receiving time point of the data is at or after a time point obtained by adding the waiting duration to a transmitting time point of the first request.

82. The core network device according to claim 80 or 81, wherein the second communication unit is configured to transmit the first request to the access network device in response to receiving a second request; wherein the second request is used to indicate the transmitting of the first request.

83. The core network device according to claim 82, wherein the first request carries second indication information, and the second indication information comprises identification information corresponding to one or more devices that need to be triggered; the one or more devices that need to be triggered comprising the terminal device.

84. The core network device according to claim 82 or 83, wherein the first request carries first configuration information, the first configuration information being used for determining the waiting duration.

85. The core network device according to claim 84, wherein the second request carries the first configuration information; or the second request carries second configuration information, the second configuration information being related to the first configuration information.

86. The core network device according to any one of claims 82 to 84, wherein the second communication unit is configured to transmit the first configuration information to the terminal device before transmitting the first request to the access network device; the first configuration information being used for determining the waiting duration.

87. The core network device according to claim 86, wherein the second communication unit is configured to receive capability information of the terminal device before transmitting the first configuration information to the terminal device, wherein the capability information of the terminal device is used for indicating whether the terminal device supports an Ambient power enabled Internet of Things (IoT) capability.

88. The core network device according to claim 87, wherein the second communication unit is configured to receive a registration request message transmitted by the terminal device; wherein the registration request message carries the capability information of the terminal device.

89. The core network device according to claim 88, wherein the core network device further comprises:
a second processing unit, configured to transmit a registration acceptance message to the terminal device through the second communication unit in response to that it is determined that the terminal device supports the Ambient IoT capability based on the capability information of the terminal device; wherein the registration acceptance message carries the first configuration information; wherein
the second communication unit is configured to transmit the registration acceptance message to the terminal device.

90. The core network device according to claim 86 or 87, wherein the second communication unit is configured to transmit a NAS message to the terminal device after the terminal device completes registration; wherein the NAS message carries the first configuration information.

91. The core network device according to any one of claims 80 to 90, wherein the second communication unit is configured to: establish a NAS connection with the terminal device and receive the data reported by the terminal device via the NAS connection; or receive the data reported by the terminal device through the access network device.

92. The core network device according to claim 84 or 86, wherein the first configuration information comprises a first response duration.

93. The core network device according to claim 92, wherein the first configuration information further comprises first indication information, the first indication information being used for indicating generation of a random number based on the first response duration.

94. The core network device according to claim 92, wherein the waiting duration is equal to the first response duration.

95. The core network device according to claim 92 or 93, wherein the waiting duration is a first random number determined based on the first response duration, the first random number being less than or equal to the first response duration.

96. The core network device according to any one of claims 24 to 95, wherein the terminal device is an Internet of Things (IoT) terminal device, or an Ambient IoT terminal device.

97. The core network device according to any one of claims 24 to 96, wherein the core network device is an access and mobility management function (AMF).

98. An access network device, comprising:
a third communication unit, configured to transmit a trigger signal and receive data reported by a terminal device, and transmit the data to a core network device; wherein a transmitting time point of the data is related to a waiting duration.

99. The access network device according to claim 98, wherein the transmitting time point of the data is at or after a time point obtained by adding the waiting duration to a transmitting time point of the trigger signal.

100. The access network device according to claim 98 or 99, wherein the third communication unit is configured to transmit the trigger signal to the terminal device in response to receiving a first request transmitted by the core network device.

101. The access network device according to claim 100, wherein the first request carries second indication information, and the second indication information comprises identification information corresponding to one or more devices that need to be triggered; the one or more devices that need to be triggered comprising the terminal device.

102. The access network device according to claim 100 or 101, wherein the first request carries first configuration information, and the first configuration information is used for determining the waiting duration.

103. The access network device according to claim 102, wherein the trigger signal carries the first configuration information.

104. The access network device according to claim 102, wherein the access network device further comprises:
a third processing unit, configured to determine the waiting duration based on the first configuration information.

105. The access network device according to claim 104, wherein the third communication unit is configured to: receive the data reported by the terminal device; and transmit the data to the core network device in response that the transmitting time point of the data arrives.

106. The access network device according to claim 104, wherein the first configuration information comprises a first response duration.

107. The access network device according to claim 106, wherein the first configuration information further comprises first indication information, the first indication information being used for indicating generation of a random number based on the first response duration.

108. The access network device according to claim 106, wherein the waiting duration is equal to the first response duration.

109. The access network device according to claim 106 or 107, wherein the waiting duration is a first random number determined based on the first response duration, the first random number being less than or equal to the first response duration.

110. The access network device according to any one of claims 98 to 109, wherein the terminal device is an Internet of Things (IoT) terminal device, or an Ambient power enabled IoT terminal device.

111. The access network device according to any one of claims 98 to 110, wherein the core network device is an AMF.

112. The access network device according to any one of claims 98 to 111, wherein the trigger signal is one of: a paging message, or a broadcast signal.

113. A terminal device, comprising: a transceiver, a processor and a memory, wherein the memory is configured to store a computer program, and the processor is configured to call the computer program stored in the memory and run the computer program, to enable the terminal device to perform the method according to any one of claims 1 to 23.

114. A core network device, comprising: a transceiver, a processor and a memory, wherein the memory is configured to store a computer program, and the processor is configured to call the computer program stored in the memory and run the computer program to enable the core network device to perform the method according to any one of claims 24 to 41.

115. An access network device, comprising: a transceiver, a processor and a memory, wherein the memory is configured to store a computer program, and the processor is configured to call the computer program stored in the memory and run the computer program, to enable the access network device to perform the method according to any one of claims 42 to 56.

116. A chip, comprising: a processor configured to call a computer program from a memory and run the computer program, to enable a device equipped with the chip to perform the method according to any one of claims 1 to 23, or claims 24 to 41, or claims 42 to 56.

117. A computer-readable storage medium, configured to store a computer program, wherein the computer-readable storage medium, when executed by a device, causes the device to perform the method according to any one of claims 1 to 23, or claims 24 to 41, or claims 42 to 56.

118. A computer program product, comprising computer program instructions, wherein the computer program instructions cause a computer to perform the method according to any one of claims 1 to 23, or claims 24 to 41, or claims 42 to 56.

119. A computer program, causing a computer to perform the method according to any one of claims 1 to 23, or claims 24 to 41, or claims 42 to 56.
